# EUROPEAN PATENT APPLICATION

(11) **EP 4 835 880 A1**
(43) Date of publication of application: **04.11.2026**
(21) Application number: 24920641.8
(22) Date of filing: 26.01.2024
(51) Int. Cl.: G09G 3/34, G09G 3/36, G09G 5/377, B60K 35/22

(54) **DISPLAY DEVICE FOR VEHICLE**

(71) Applicant: LG Electronics Inc., Yeongdeungpo-gu Seoul 07336 (KR)
(72) Inventor: KIM, Sangwon, Seoul 06772 (KR); JUNG, Woo, Seoul 06772 (KR); KIM, Kyunglack, Seoul 06772 (KR); HWANG, Sangroc, Seoul 06772 (KR)
(74) Representative: Vossius & Partner Patentanwälte Rechtsanwälte mbB
(86) International application number: PCT/KR2024/001301
(87) International publication number: WO 2025/159224

(57) **Abstract**

A display apparatus for a vehicle is disclosed. A display apparatus for a vehicle according to an embodiment of the present disclosure includes: a display; and a signal processing device configured to output an image signal to the display, wherein, while displaying a vehicle information image in a first area of the display, the signal processing device is configured to change the luminance of the vehicle information image or an image based on a camera to be displayed in a second area of the display, in response to a difference in luminance between the vehicle information image and the image based on the camera being greater than or equal to a predetermined value. Accordingly, it is possible to reduce glare caused by the difference in luminance on the display.

## Description

### BACKGROUND

### 1. Field

The present disclosure relates to a display apparatus for a vehicle, and more particularly, to a display apparatus for a vehicle capable of reducing glare caused by a difference in luminance on a display.

### 2. Description of the Related Art

A vehicle is a machine that allows a user who rides therein to move in a desired direction. A representative example of the vehicle is a car.

Meanwhile, for convenience of vehicle users, some vehicles are equipped with a display apparatus or device.

For example, a display is provided on an instrument cluster to present various types of information. In addition to the cluster display, in order to display vehicle driving information and the like, various displays, such as an AVN (Audio Video Navigation) display, are increasingly being mounted in vehicles.

Recently, an integrated display has also been realized by integrating the cluster display and the AVN display.

However, when implementing such an integrated display, different images are displayed in respective areas or regions, which may cause glare due to a difference in luminance.

### SUMMARY

It is an object of the present disclosure to provide a display apparatus for a vehicle capable of reducing glare caused by a difference in luminance on a display.

It is another object of the present disclosure to provide a display apparatus for a vehicle capable of displaying a tell-tale image in a stable or reliable manner.

In accordance with an aspect of the present disclosure, the above and other objects can be accomplished by providing a display apparatus for a vehicle including: a display; and a signal processing device configured to output an image signal to the display, wherein, while displaying a vehicle information image in a first area of the display, the signal processing device is configured to change the luminance of the vehicle information image or an image based on a camera to be displayed in a second area of the display, in response to a difference in luminance between the vehicle information image and the image based on the camera being greater than or equal to a predetermined value.

During nighttime driving, the signal processing device can be configured to increase the luminance of the image based on the camera in a stepwise manner, in response to the difference in luminance between the vehicle information image and the image based on the camera being greater than or equal to the predetermined value.

The signal processing device can be configured to increase the luminance of the image based on the camera in a stepwise manner, in response to the difference in luminance between the vehicle information image and the image based on the camera being greater than or equal to the predetermined value and the luminance of the image based on the camera being greater than the luminance of the vehicle information image.

While displaying the vehicle information image in the first area of the display and displaying a map image in the second area of the display, when the camera is activated and the image displayed in the second area is switched to the image based on the camera, the signal processing device can be configured to change the luminance of the vehicle information image or the image based on the camera, in response to a difference in luminance between the vehicle information image and the image based on the camera being greater than or equal to the predetermined value.

The signal processing device can be configured to change the luminance of the vehicle information image or the image based on the camera based on ambient illuminance around the vehicle.

The signal processing device can be configured to change the predetermined value based on the ambient illuminance around the vehicle.

The signal processing device can be configured to change the luminance of the vehicle information image or the image based on the camera based on a setting input.

The signal processing device can be configured to change the predetermined value based on the setting input.

While displaying the vehicle information image in the first area of the display, the signal processing device can be configured to overlay a second layer including a tell-tale image on a first layer including surrounding vehicle information.

The signal processing device can be configured to differentiate a safety level of the first layer including the surrounding vehicle information from a safety level of the second layer including the tell-tale image.

The signal processing device can be configured to cause the safety level of the first layer including the surrounding vehicle information to be higher than the second layer including the tell-tale image.

The signal processing device can be configured to overlay the second layer and the first layer on a third layer including the image based on the camera.

The vehicle information image can include vehicle speed information, vehicle driving information, vehicle temperature information, a tell-tale image, or battery charging information.

The image based on the camera can include a vehicle surroundings image, a front-of-vehicle image, or a rear-of-vehicle image.

The display can include: a liquid crystal panel; and a backlight configured to output light to the liquid crystal panel. In response to a difference in luminance between the vehicle information image in a first area of the display and an image based on a camera to be displayed in a second area of the display being greater than or equal to a predetermined value, the signal processing device can be configured to change light emitted from the backlight disposed in the first area or the second area.

During nighttime driving, the signal processing device can be configured to increase, in a stepwise manner, light emitted from the backlight disposed in the second area, in response to the difference in luminance between the vehicle information image and the image based on the camera being greater than or equal to the predetermined value.

The signal processing device can be configured to increase, in a stepwise manner, light emitted from the backlight disposed in the second area, in response to the difference in luminance between the vehicle information image and the image based on the camera being greater than or equal to the predetermined value and the luminance of the image based on the camera being greater than the luminance of the vehicle information image.

The display can include an organic light emitting diode (OLED) panel. In response to a difference in luminance between the vehicle information image in a first area of the display and an image based on a camera to be displayed in a second area of the display being greater than or equal to a predetermined value, the signal processing device can be configured to change the luminance of the vehicle information image or the image based on the camera.

During nighttime driving, the signal processing device can be configured to increase the luminance of the image based on the camera in a stepwise manner, in response to the difference in luminance between the vehicle information image and the image based on the camera being greater than or equal to the predetermined value.

The signal processing device can be configured to increase, in a stepwise manner, the luminance of the image based on the camera displayed on the OLED panel, in response to the difference in luminance between the vehicle information image and the image based on the camera being greater than or equal to the predetermined value and the luminance of the image based on the camera being greater than the luminance of the vehicle information image.

The display can further include a driving controller configured to output a driving signal to the OLED panel. Based on at least one tell-tale image stored in a memory, the driving controller can output the at least one tell-tale image in a partial area of the OLED panel.

In accordance with an aspect of the present disclosure, there is provided a display apparatus for a vehicle including: a display; and a signal processing device configured to output an image signal to the display, wherein, while displaying a vehicle information image in a first area of the display and a map image is displayed in a second area of the display, the signal processing device is configured to change, in response to a difference in luminance between an image based on a camera to be displayed in the first area in place of the vehicle information image and the map image or the vehicle information image being greater than or equal to a predetermined value, the luminance of the image based on the camera, the map image, or the vehicle information image.

During nighttime driving, the signal processing device can be configured to increase the luminance of the image based on the camera in a stepwise manner, in response to the difference in luminance between the map image and the image based on the camera being greater than or equal to the predetermined value.

The signal processing device can be configured to increase the luminance of the image based on the camera in a stepwise manner, in response to the difference in luminance between the map image and the image based on the camera being greater than or equal to the predetermined value and the luminance of the image based on the camera being greater than the map image or the vehicle information image.

### EFFECTS OF THE DISCLOSURE

A display apparatus for a vehicle according to an embodiment of the present disclosure includes: a display; and a signal processing device configured to output an image signal to the display, wherein, while displaying a vehicle information image in a first area of the display, the signal processing device is configured to change the luminance of the vehicle information image or an image based on a camera to be displayed in a second area of the display, in response to a difference in luminance between the vehicle information image and the image based on the camera being greater than or equal to a predetermined value. Accordingly, it is possible to reduce glare caused by the difference in luminance on the display.

Meanwhile, during nighttime driving, the signal processing device can be configured to increase the luminance of the image based on the camera in a stepwise manner, in response to the difference in luminance between the vehicle information image and the image based on the camera being greater than or equal to the predetermined value. Accordingly, it is possible to reduce glare caused by the difference in luminance on the display.

Meanwhile, the signal processing device can be configured to increase the luminance of the image based on the camera in a stepwise manner, in response to the difference in luminance between the vehicle information image and the image based on the camera being greater than or equal to the predetermined value and the luminance of the image based on the camera being greater than the luminance of the vehicle information image. Accordingly, it is possible to reduce glare caused by the difference in luminance on the display.

Meanwhile, while displaying the vehicle information image in the first area of the display and displaying a map image in the second area of the display, when the camera is activated and the image displayed in the second area is switched to the image based on the camera, the signal processing device can be configured to change the luminance of the vehicle information image or the image based on the camera, in response to a difference in luminance between the vehicle information image and the image based on the camera being greater than or equal to the predetermined value. Accordingly, it is possible to reduce glare caused by the difference in luminance on the display.

Meanwhile, the signal processing device can be configured to change the luminance of the vehicle information image or the image based on the camera based on ambient illuminance around the vehicle. Accordingly, it is possible to change the luminance of the image in response to the ambient illuminance around the vehicle.

Meanwhile, the signal processing device can be configured to change the predetermined value based on the ambient illuminance around the vehicle. Accordingly, it is possible to reduce glare caused by the difference in luminance on the display in response to the ambient illuminance around the vehicle.

Meanwhile, the signal processing device can be configured to change the luminance of the vehicle information image or the image based on the camera based on a setting input. Accordingly, it is possible to change the luminance of the image in response to the setting input.

Meanwhile, the signal processing device can be configured to change the predetermined value based on the setting input. Accordingly, it is possible to change the luminance of the image in response to the setting input.

Meanwhile, while displaying the vehicle information image in the first area of the display, the signal processing device can be configured to overlay a second layer including a tell-tale image on a first layer including surrounding vehicle information. Accordingly, it is possible to reduce glare caused by the difference in luminance on the display.

Meanwhile, the signal processing device can be configured to differentiate a safety level of the first layer including the surrounding vehicle information from a safety level of the second layer including the tell-tale image. Accordingly, it is possible to separately display layers according to the safety levels.

Meanwhile, the signal processing device can be configured to cause the safety level of the first layer including the surrounding vehicle information to be higher than the second layer including the tell-tale image. Accordingly, it is possible separately display layers according to the safety levels.

Meanwhile, the signal processing device can be configured to overlay the second layer and the first layer on a third layer including the image based on the camera. Accordingly, it is possible to reduce glare caused by the difference in luminance on the display.

Meanwhile, the vehicle information image can include vehicle speed information, vehicle driving information, vehicle temperature information, a tell-tale image, or battery charging information. Accordingly, it is possible to reduce glare caused by the difference in luminance on the display.

Meanwhile, the image based on the camera can include a vehicle surroundings image, a front-of-vehicle image, or a rear-of-vehicle image. Accordingly, it is possible to reduce glare caused by the difference in luminance on the display.

Meanwhile, the display can include: a liquid crystal panel; and a backlight configured to output light to the liquid crystal panel. In response to a difference in luminance between the vehicle information image in a first area of the display and an image based on a camera to be displayed in a second area of the display being greater than or equal to a predetermined value, the signal processing device can be configured to change light emitted from the backlight disposed in the first area or the second area. Accordingly, it is possible to reduce glare caused by the difference in luminance on the display.

Meanwhile, during nighttime driving, the signal processing device can be configured to increase, in a stepwise manner, light emitted from the backlight disposed in the second area, in response to the difference in luminance between the vehicle information image and the image based on the camera being greater than or equal to the predetermined value. Accordingly, it is possible to reduce glare caused by the difference in luminance on the display.

Meanwhile, the signal processing device can be configured to increase, in a stepwise manner, light emitted from the backlight disposed in the second area, in response to the difference in luminance between the vehicle information image and the image based on the camera being greater than or equal to the predetermined value and the luminance of the image based on the camera being greater than the luminance of the vehicle information image.

Meanwhile, the display can include an organic light emitting diode (OLED) panel. In response to a difference in luminance between the vehicle information image in a first area of the display and an image based on a camera to be displayed in a second area of the display being greater than or equal to a predetermined value, the signal processing device can be configured to change the luminance of the vehicle information image or the image based on the camera.

Meanwhile, during nighttime driving, the signal processing device can be configured to increase the luminance of the image based on the camera in a stepwise manner, in response to the difference in luminance between the vehicle information image and the image based on the camera being greater than or equal to the predetermined value.

Meanwhile, the signal processing device can be configured to increase, in a stepwise manner, the luminance of the image based on the camera displayed on the OLED panel, in response to the difference in luminance between the vehicle information image and the image based on the camera being greater than or equal to the predetermined value and the luminance of the image based on the camera being greater than the luminance of the vehicle information image.

Meanwhile, the display can further include a driving controller configured to output a driving signal to the OLED panel. Based on at least one tell-tale image stored in a memory, the driving controller can output the at least one tell-tale image in a partial area of the OLED panel. Accordingly, it is possible to reduce glare caused by the difference in luminance on the display.

A display apparatus for a vehicle according to another embodiment of the present disclosure includes: a display; and a signal processing device configured to output an image signal to the display, wherein, while displaying a vehicle information image in a first area of the display and a map image is displayed in a second area of the display, the signal processing device is configured to change, in response to a difference in luminance between an image based on a camera to be displayed in the first area in place of the vehicle information image and the map image or the vehicle information image being greater than or equal to a predetermined value, the luminance of the image based on the camera, the map image, or the vehicle information image. Accordingly, it is possible to reduce glare caused by the difference in luminance on the display.

Meanwhile, during nighttime driving, the signal processing device can be configured to increase the luminance of the image based on the camera in a stepwise manner, in response to the difference in luminance between the map image and the image based on the camera being greater than or equal to the predetermined value. Accordingly, it is possible to reduce glare caused by the difference in luminance on the display.

Meanwhile, the signal processing device can be configured to increase the luminance of the image based on the camera in a stepwise manner, in response to the difference in luminance between the map image and the image based on the camera being greater than or equal to the predetermined value and the luminance of the image based on the camera being greater than the map image or the vehicle information image. Accordingly, it is possible to reduce glare caused by the difference in luminance on the display.

### BRIEF DESCRIPTION OF THE DRAWINGS

FIG. 1 illustrates an example of the exterior and interior of a vehicle.
FIG. 2 illustrates an outer appearance of a display apparatus for a vehicle according to an embodiment of the present disclosure.
FIG. 3 illustrates an example of an internal block diagram of the display apparatus for a vehicle of FIG. 2.
FIG. 4 illustrates an example of an internal block diagram of a first display of FIG. 3.
FIGS. 5A to 5C are diagrams illustrating various examples of the arrangement of a backlight of FIG. 4.
FIG. 6 illustrates an example of an internal block diagram of a display apparatus for a vehicle related to the present disclosure.
FIG. 7 illustrates an example of an internal block diagram of a display apparatus for a vehicle according to an embodiment of the present disclosure.
FIG. 8A illustrates an example of an internal block diagram of a display apparatus for a vehicle according to another embodiment of the present disclosure.
FIG. 8B is a diagram referred to in the description of FIG. 8A.
FIG. 9 is a flowchart illustrating a method of operating a display apparatus for a vehicle according to an embodiment of the present disclosure.
FIGS. 10A to 22C are diagrams referred to in the description of FIG. 9.
FIG. 22 illustrates another example of an internal block diagram of the first display of FIG. 3.
FIGS. 23A to 23D are diagrams referred to in the description of an organic light emitting diode panel of FIG. 22.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

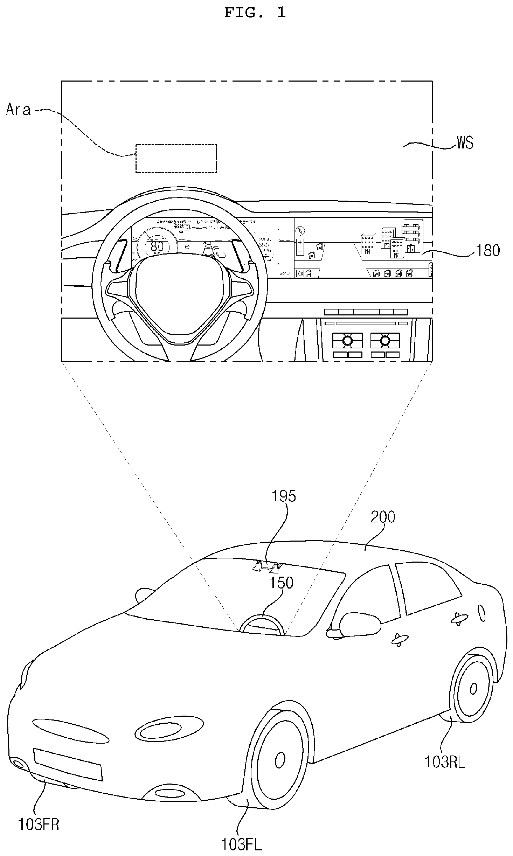

FIG. 1 illustrates an example of the exterior and interior of a vehicle.

Referring to FIG.1, a vehicle 200 can include a plurality of wheels 103FR, 103FL, 103RL,... rotated by a power source and a steering wheel 150 for adjusting a traveling direction of the vehicle 200.

The vehicle 200 can further include a camera 195 for acquiring an image of the front of the vehicle.

Meanwhile, the vehicle 200 can further include therein a plurality of displays 180 and 180h for displaying images, information, and the like.

For example, of the plurality of displays 180 and 180h, a first display 180 can serve as a cluster display and an audio video navigation (AVN) display, and a second display 180h can be a head-up display (HUD) in which an image is projected onto a predetermined area ARa of a windshield WS.

In another example, the first display 180 can serve as a cluster display, an audio video navigation (AVN) display, and a passenger seat display.

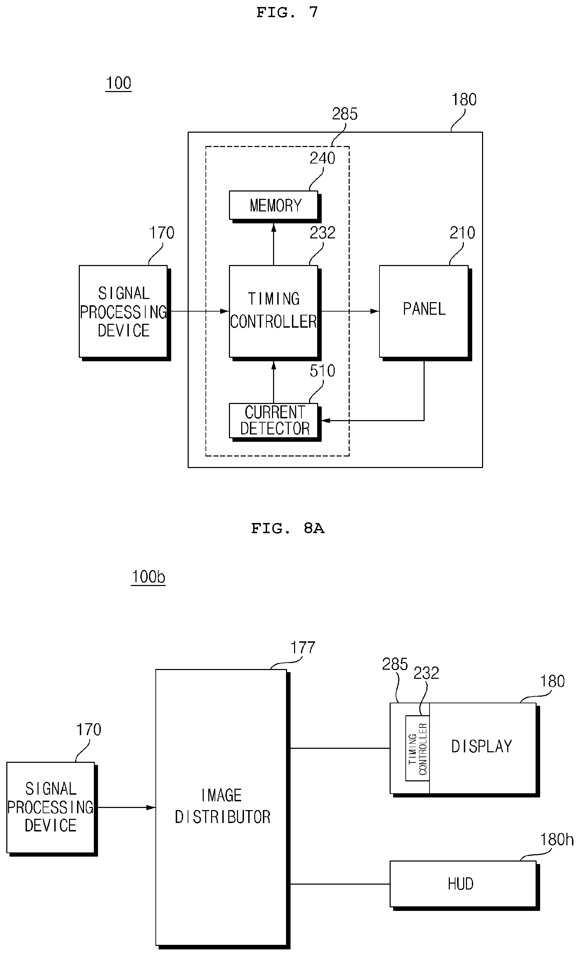

Meanwhile, in a display apparatus 100 for a vehicle of the present disclosure (see FIG. 7), a vehicle information image and an image based on a camera are displayed on the first display 180 of the plurality of displays 180 and 180h.

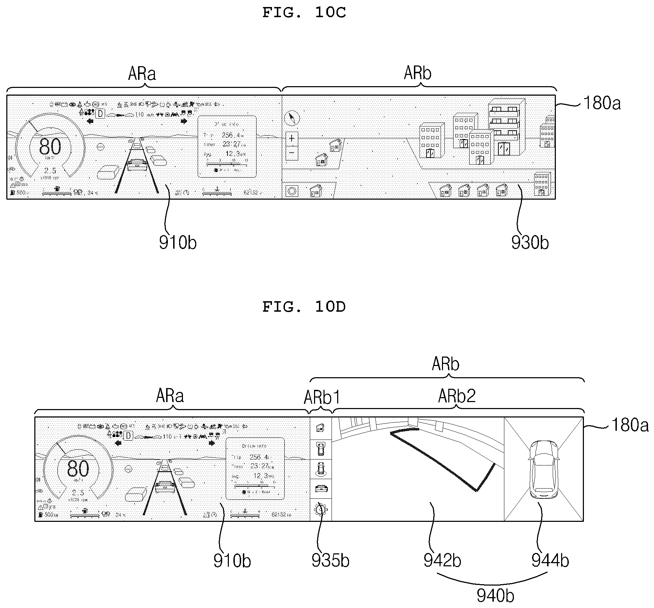

Meanwhile, the display apparatus 100 for a vehicle according to an embodiment of the present disclosure (see FIG. 7) includes a display 180 and a signal processing device 170 configured to output an image signal to the display 180. While displaying a vehicle information image in a first area ARa (see FIG. 10D) of the display 180, when a difference in luminance between the vehicle information image and an image based on a camera to be displayed in a second area ARb (see FIG. 10D) of the display 180 is greater than or equal to a predetermined value, the signal processing device 170 changes the luminance of the vehicle information image or the image based on the camera. Accordingly, glare caused by the difference in luminance on the display 180 can be reduced.

In particular, during nighttime driving, when the difference in luminance between the vehicle information image and the image based on the camera is greater than or equal to the predetermined value, the signal processing device 170 can be configured to increase the luminance of the image based on the camera in a stepwise manner. Accordingly, glare caused by the difference in luminance on the display 180 can be reduced.

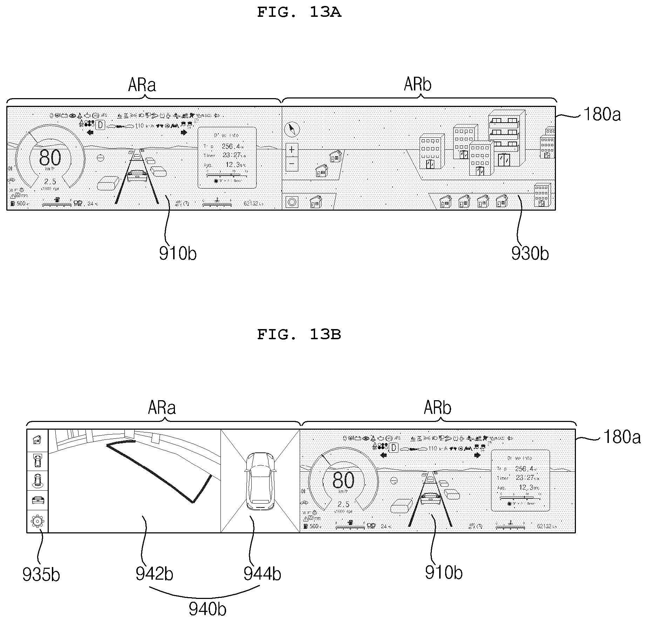

Meanwhile, the display apparatus 100 for a vehicle according to another embodiment of the present disclosure (see FIG. 7) includes a display 180 and a signal processing device 170 configured to output an image signal to the display 180. While displaying a vehicle information image in a first area ARa (see FIG. 13B) of the display 180 and a map image is displayed in a second area ARb (see FIG. 13B), when a difference in luminance between an image based on a camera to be displayed in the first area ARa in place of the vehicle information image and the map image or the vehicle information image is greater than or equal to a predetermined value, the signal processing device 170 changes the luminance of the image based on the camera, the map image, or the vehicle information image. Accordingly, glare caused by the difference in luminance on the display 180 can be reduced.

Meanwhile, during nighttime driving, when the difference in luminance between the map image and the image based on the camera is greater than or equal to the predetermined value, the signal processing device 170 can be configured to increase the luminance of the image based on the camera in a stepwise manner. Accordingly, glare caused by the difference in luminance on the display 180 can be reduced.

Meanwhile, the vehicle 200 described herein can be a concept including all of an internal combustion engine vehicle having an engine as a power source, a hybrid vehicle having an engine and an electric motor as power sources, and an electric vehicle having an electric motor as a power source.

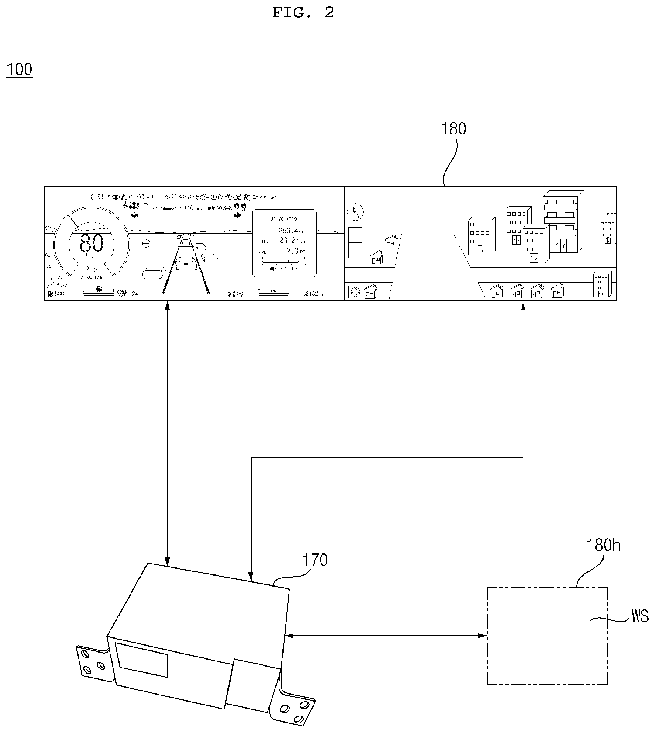

FIG. 2 illustrates an outer appearance of a display apparatus for a vehicle according to an embodiment of the present disclosure.

The display apparatus 100 for a vehicle (or simply "vehicle display apparatus") according to an embodiment of the present disclosure can include a signal processing device 170 configured to perform signal processing to display an image, information, and the like on at least one of the plurality of displays 180 and 180h.

Of the plurality of displays 180 and 180h, the first display 180 can be both a cluster display for displaying a driving state and operation information and an audio video navigation (AVN) display for displaying vehicle operation information, a navigation map, various types of entertainment information, or an image, and the second display 180h can be a HUD display for displaying vehicle driving information.

The signal processing device 170 can be provided therein with a memory 508 and a processor 175 to control at least one of the plurality of displays 180 and 180h.

Meanwhile, the signal processing device 170 can execute first to third virtual machines (not shown) on a hypervisor 505 in the processor 175.

The first virtual machine (not shown), which is a server virtual machine, can control the second virtual machine (not shown) and the third virtual machine (not shown), which are guest virtual machines.

Meanwhile, the second virtual machine can be referred to as a first guest virtual machine, and the third virtual machine can be referred to as a second guest virtual machine.

The first guest virtual machine (not shown) can be operated for the first display 180, and the second guest virtual machine (not shown) can be operated for the second display 180h.

Meanwhile, the server virtual machine (not shown) in the processor 175 can be configured to set the memory 508 based on the hypervisor 505 for transmission of the same data to the first guest virtual machine (not shown) and the second guest virtual machine (not shown). Accordingly, the first display 180 and the second display 180h in the vehicle can display the same information or the same image in a synchronized manner.

Meanwhile, the server virtual machine (not shown) in the processor 175 can receive and process wheel speed sensor data of the vehicle, and can transmit the processed wheel speed sensor data to at least one of the first guest virtual machine (not shown) and the second guest virtual machine (not shown). Accordingly, at least one virtual machine can share the wheel speed sensor data of the vehicle.

Thus, the plurality of displays 180 and 180h can be controlled by the single signal processing device 170.

Meanwhile, a part of the plurality of displays 180 and 180h can operate under a Linux-based operating system (OS), and another part thereof can operate under a Web-based operating system (OS).

In some embodiments, the signal processing device 170 can control the plurality of displays 180 and 180h operating under different operating systems (OS) to display the same information or the same image in a synchronized manner.

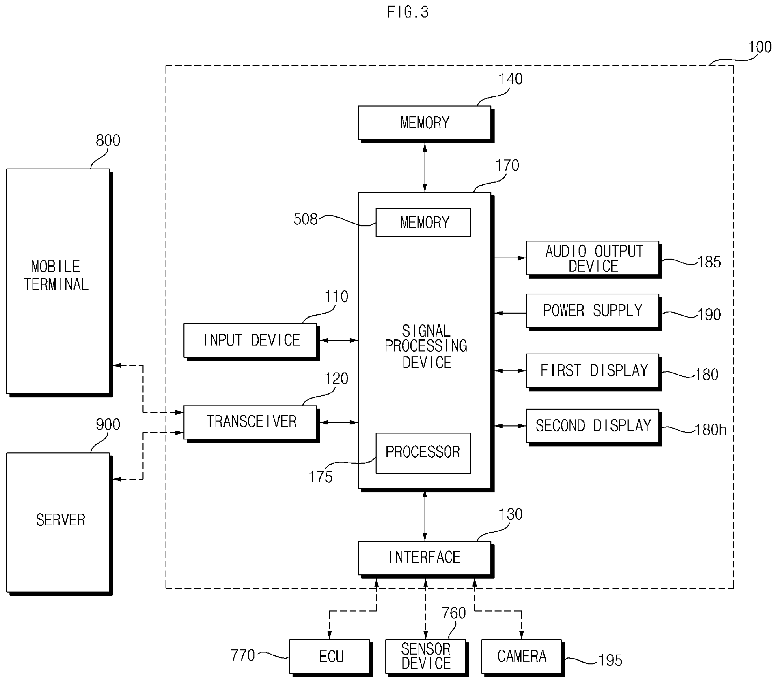

FIG. 3 illustrates an example of an internal block diagram of a display apparatus for a vehicle according to an embodiment of the present disclosure.

Referring to FIG. 3, the vehicle display apparatus 100 according to an embodiment of the present disclosure can include an input device 110, a transceiver 120, an interface 130, a memory 140, a signal processing device 170, a plurality of displays 180 and 180h, an audio output device 185, and a power supply 190.

The input device 110 can include a physical button, a pad, and the like for button input, touch input, and the like.

Meanwhile, the input device 110 can include a microphone (not shown) for user voice input.

The transceiver 120 can wirelessly exchange data with a mobile terminal 800 or a server (not shown).

In particular, the transceiver 120 can wirelessly exchange data with a mobile terminal of a vehicle driver. Any of various data communication schemes, such as Bluetooth, Wi-Fi, Wi-Fi Direct, and APIX, can be used as a wireless data communication scheme.

The transceiver 120 can receive weather information and road traffic condition information, e.g., transport protocol expert group (TPEG) information, from the mobile terminal 800 or the server (not shown). To this end, the transceiver 120 can include a mobile communication module (not shown).

The interface 130 can receive sensor information from an electronic control unit (ECU) 770 or a sensor device 760, and can transmit the received information to the signal processing device 170.

Here, the sensor information can include at least one of vehicle heading information, vehicle location information (global positioning system (GPS) information), vehicle angle information, vehicle speed information, vehicle acceleration information, vehicle tilt information, vehicle forward/backward movement information, battery information, fuel information, tire information, vehicle lamp information, in-vehicle temperature information, and in-vehicle humidity information.

The sensor information can be acquired from a heading sensor, a yaw sensor, a gyro sensor, a position module, a vehicle forward/backward movement sensor, a wheel sensor, a vehicle speed sensor, a vehicle body tilt sensor, a battery sensor, a fuel sensor, a tire sensor, a steering wheel rotation sensor, an in-vehicle temperature sensor, an in-vehicle humidity sensor, etc. The position module can include a GPS module for receiving GPS information.

Meanwhile, the interface 130 can receive front-of-vehicle image data, side-of-vehicle image data, rear-of-vehicle image data, and obstacle-around-vehicle distance information from a camera 195, a LiDAR (not shown), or the like, and can transmit the received information to the signal processing device 170.

The memory 140 can store various data necessary for the overall operation of the vehicle display apparatus 100, such as programs for processing or control of the signal processing device 170.

For example, the memory 140 can store data regarding a hypervisor, a server virtual machine (not shown), and a plurality of guest virtual machines to execute within the processor 175.

The audio output device 185 can convert an electrical signal from the signal processing device 170 into an audio signal and output the audio signal. To this end, the audio output device 185 can include a speaker and the like.

Under the control of the signal processing device 170, the power supply 190 can supply power required for the operation of each component. In particular, the power supply 190 can receive power from a battery in the vehicle.

The second display 180h, which is a HUD display, can include a picture generation device 300 (see FIG. 1) to project an image, and can output an augmented reality-based object under the control of the signal processing device 170.

For example, the HUD display 180h can output vehicle speed information, vehicle traveling direction information, a forward-vehicle object, a distance indicator showing a distance to a vehicle ahead, and the like.

In another example, the HUD display 180h can output an augmented reality lane carpet, an augmented reality route carpet, or an augmented reality dynamic carpet corresponding to a road image.

The signal processing device 170 can control the plurality of displays 180 and 180h.

The signal processing device 170 can control the overall operation of each unit in the vehicle display apparatus 100.

For example, the signal processing device 170 can include a memory 508, and a processor 175 configured to perform signal processing for the vehicle displays 180 and 180h.

The processor 175 can execute the hypervisor (not shown), and can execute the server virtual machine (not shown) and the plurality of guest virtual machines (not shown) on the executed hypervisor.

Here, the first guest virtual machine (not shown) can be operated for the first display 180, and the second guest virtual machine (not shown) can be operated for the second display 180h.

Meanwhile, the signal processing device 170 can process various signals, such as an audio signal, a video (or image) signal, and a data signal. To this end, the signal processing device 170 can be implemented in the form of a system on chip (SOC).

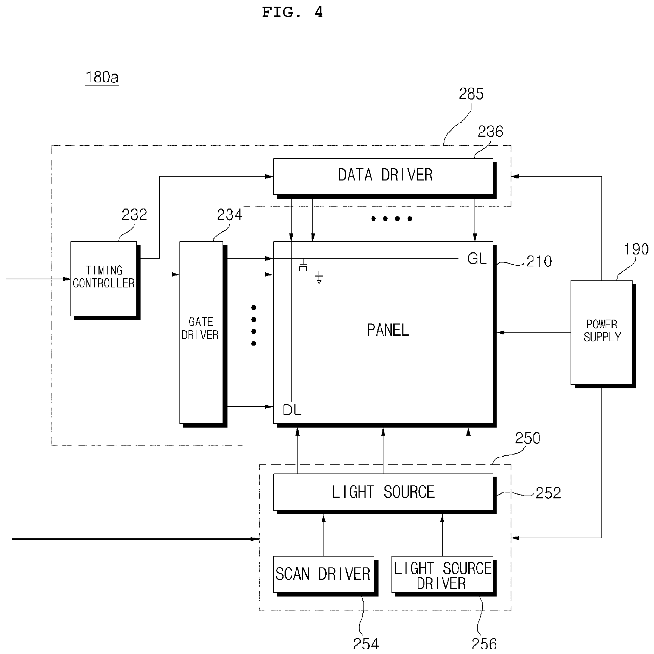

FIG. 4 illustrates an example of an internal block diagram of the first display of FIG. 3.

Referring to FIG. 4, a display 180a based on a liquid crystal display (LCD) panel can include a liquid crystal panel 210, a driving controller 285a, and a backlight 250.

In order to display an image, the liquid crystal panel 210 includes a first substrate on which a plurality of gate lines GL and data lines DL are arranged to intersect each other in a matrix form and on which thin film transistors and pixel electrodes connected thereto are formed in intersecting areas; a second substrate having a common electrode; and a liquid crystal layer formed between the first substrate and the second substrate.

The driving controller 285a drives the liquid crystal panel 210 based on a control signal and a data signal supplied from the signal processing device 170 of FIG. 3. To this end, the driving controller 285a includes a timing controller 232a, a gate driver 234a, and a data driver 236a.

The timing controller 232a receives a control signal and R, G, and B data signals from the signal processing device 170, a vertical synchronization signal (Vsync), and the like, controls the gate driver 234a and the data driver 236a in response to the control signal, and rearranges the R, G, and B data signals to provide the rearranged R, G, and B data signals to the data driver 236a.

Under the control of the gate driver 234a, the data driver 236a, and the timing controller 232a, a scanning signal and an image signal are supplied to the liquid crystal panel 210 through the gate line GL and the data line DL.

The backlight 250 supplies light to the liquid crystal panel 210. To this end, the backlight 250 can include a plurality of light sources 252, a scan driver 254 configured to control scanning operation of the light sources 252, and a light source driver 256 configured to turn ON/OFF the light sources 252.

In a state in which light transmittance of the liquid crystal layer 210 is adjusted by an electric field formed between the pixel electrode and the common electrode of the liquid crystal panel 210, a predetermined image is displayed using light emitted from the backlight 250.

The power supply 190 can supply a common electrode voltage (Vcom) to the liquid crystal panel 210, and can supply a gamma voltage to the data driver 236a. In addition, the power supply 190 can supply driving power for driving the light sources 252 to the backlight 250.

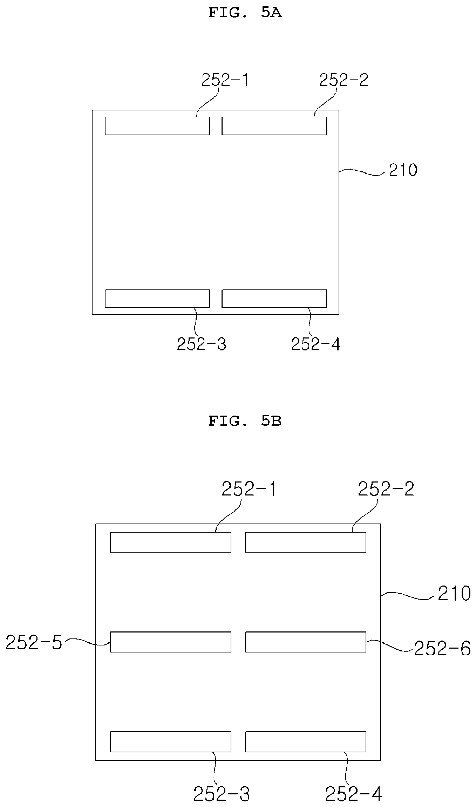

FIGS. 5A to 5C are diagrams illustrating various examples of the arrangement of the backlight of FIG. 4.

First, FIG. 5A illustrates a plurality of light sources 252-1, 252-2, 252-3, and 252-4 disposed at upper and lower sides of the rear surface of the liquid crystal panel 210. The plurality of light sources 252-1, 252-2, 252-3, and 252-4 can include a plurality of light emitting diodes (LEDs).

Next, FIG. 5B illustrates a plurality of light sources 252-1, 252-2, 252-3, 252-4, 252-5, and 252-6 disposed at upper, lower, and central sides of the rear surface of the liquid crystal panel 210. The plurality of light sources 252-1, 252-2, 252-3, 252-4, 252-5, and 252-6 can include a plurality of light emitting diodes (LEDs).

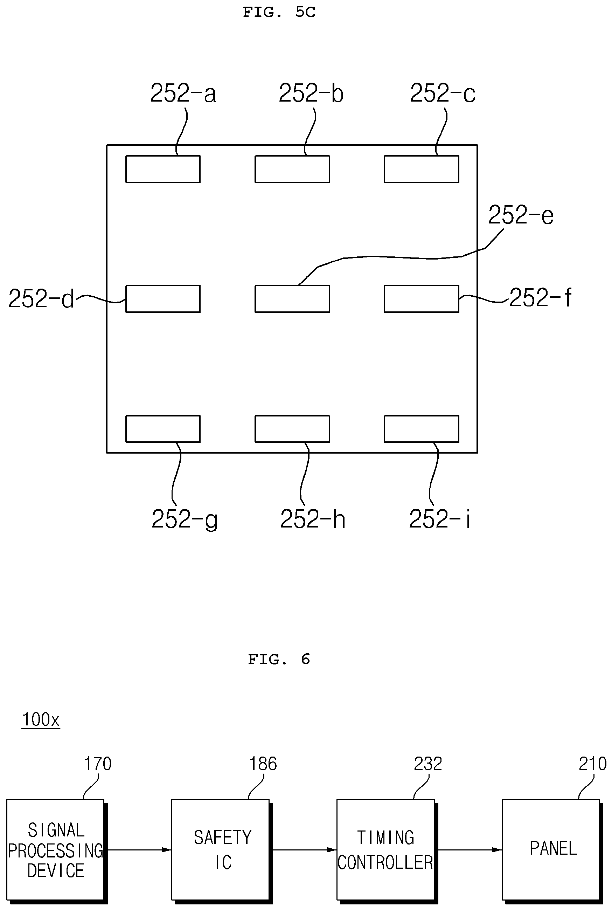

Next, FIG. 5C illustrates a plurality of light sources 252-a, 252-b, and 252-c disposed at an upper side of the rear surface of the liquid crystal panel 210, a plurality of light sources 252-g, 252-h, and 252-i disposed at a lower side thereof, and a plurality of light sources 252-d, 252-e, and 252-f disposed in a central region between the upper side and the lower side. Each light source can include a plurality of light emitting diodes (LEDs).

FIG. 6 illustrates an example of an internal block diagram of a display apparatus for a vehicle related to the present disclosure.

Referring to FIG. 6, a display apparatus 100x for a vehicle (or simply referred to as "vehicle display apparatus") related to the present disclosure includes a signal processing device 170, a safety processor 186, a timing controller 232, and a panel 210.

The signal processing device 170 outputs an image signal, and the safety processor 186 receives the image signal and outputs the image signal and a signal corresponding to a vehicle warning (tell-tale) image.

The tell-tale image can include at least one of steering wheel information, battery information, ABS information, front lighting information, airbag information, electronic parking brake information, Auto Hold information, door information, seat belt information, DPF (Diesel Particulate Filter) information, tail lamp information, low beam information, high beam information, and HDC (Hill Descent Control) information.

The timing controller 232 can receive the image signal and the signal corresponding to the tell-tale image and output a scan signal and a data signal to the panel 210.

Accordingly, an image corresponding to the image signal and the tell-tale image can be displayed on the panel 210.

Meanwhile, the signal processing device 170 and the safety processor 186 in the vehicle display apparatus 100x related to the present disclosure can be mounted on a first circuit board (not shown), and the timing controller 232 can be mounted on a second circuit board (not shown).

Accordingly, for transmission of the image signal and the signal corresponding to the tell-tale image, the safety processor 186 can convert them into low-voltage differential signaling (LVDS) signals and transmit the converted LVDS signals to the timing controller 232.

However, as the safety processor 186 and the timing controller 232 are spaced apart from each other, if the timing controller 232 fails to receive a signal from the safety processor 186, an image or a tell-tale image cannot be displayed.

For example, when the safety processor 186 malfunctions or fails, a tell-tale image related to safety cannot be displayed on the panel 210, which may cause a significant risk to vehicle safety.

Therefore, the present disclosure proposes a method for displaying a tell-tale image in a stable manner.

FIG. 7 illustrates an example of an internal block diagram of a display apparatus for a vehicle according to an embodiment of the present disclosure.

Referring to FIG. 7, the vehicle display apparatus 100 according to an embodiment of the present disclosure includes a display 180 and a signal processing device 170 configured to output an image signal to the display 180.

Meanwhile, according to an embodiment of the present disclosure, while displaying a vehicle information image in a first area ARa (see FIG. 10D) of the display 180, when a difference in luminance between the vehicle information image and an image based on a camera to be displayed in a second area ARb (see FIG. 10D) of the display 180 is greater than or equal to a predetermined value, the signal processing device 170 changes the luminance of the vehicle information image or the image based on the camera. Accordingly, glare caused by the difference in luminance on the display 180 can be reduced.

Meanwhile, during nighttime driving, the signal processing device 170 can be configured to increase the luminance of the image based on the camera in a stepwise manner, in response to the difference in luminance between the vehicle information image and the image based on the camera being greater than or equal to the predetermined value. Accordingly, glare caused by the difference in luminance on the display 180 can be reduced.

Meanwhile, according to another embodiment of the present disclosure, while displaying a vehicle information image in a first area ARa (see FIG. 13B) of the display 180 and a map image is displayed in a second area ARb (see FIG. 13B), when a difference in luminance between an image based on a camera to be displayed in the first area ARa in place of the vehicle information image and the map image or the vehicle information image is greater than or equal to a predetermined value, the signal processing device 170 changes the luminance of the image based on the camera, the map image, or the vehicle information image. Accordingly, glare caused by the difference in luminance on the display 180 can be reduced.

Meanwhile, during nighttime driving, the signal processing device 170 can be configured to increase the luminance of the image based on the camera in a stepwise manner, in response to the difference in luminance between the map image and the image based on the camera being greater than or equal to the predetermined value. Accordingly, glare caused by the difference in luminance on the display 180 can be reduced.

Meanwhile, the display 180 can include a panel 210 and a driving controller 285 configured to output a driving signal to the panel 210.

The driving controller 285 can include a memory 240, a timing controller 232 configured to output a driving signal to the panel 210, and a current detector 510 configured to detect a current flowing through the panel 210.

Meanwhile, the driving controller 285 can output at least one tell-tale image to the panel 210 based on at least one tell-tale image stored in the memory 240.

Accordingly, the tell-tale image can be displayed in a stable manner. In particular, the tell-tale image can be output independently of the signal processing device 170, thereby stably displaying the tell-tale image.

Meanwhile, the at least one tell-tale image stored in the memory 240 can include a steering wheel information image, a battery information image, an ABS information image, a front lighting (AFS) information image, an airbag information image, an electronic parking brake (EPB) information image, and an Auto Hold information image.

When output of the image signal from the signal processing device 170 is interrupted, the driving controller 285 can output at least one tell-tale image and a predetermined image stored in the memory 240 to the panel 210. Accordingly, at least one tell-tale image can be displayed in a stable manner.

Meanwhile, the signal processing device 170 can output an image signal including a plurality of tell-tale images.

Meanwhile, the driving controller 285 can receive the plurality of tell-tale images from the signal processing device 170, and can output the plurality of tell-tale images to the panel 210, separately from the at least one tell-tale image. Accordingly, the plurality of tell-tale images can be displayed.

At this time, the plurality of tell-tale images output from the signal processing device 170 can include a door information image, a seat belt information image, a DPF (Diesel Particulate Filter) information image, a tail lamp information image, a low beam information image, a high beam information image, and a HDC (Hill Descent Control) information image.

Meanwhile, when output of the image signal from the signal processing device 170 is interrupted, the driving controller 285 can output the at least one tell-tale image without outputting the plurality of tell-tale images. Accordingly, the tell-tale image can be displayed in a stable manner.

Meanwhile, a safety level of the at least one tell-tale image output from the driving controller 285 can be higher than a safety level of the plurality of tell-tale images output from the signal processing device 170.

Accordingly, even when the signal output from the signal processing device 170 is interrupted due to a failure of the signal processing device 170 or the like, at least one tell-tale image can be stably displayed by the driving controller 285.

FIG. 8A illustrates an example of an internal block diagram of a vehicle display apparatus according to another embodiment of the present disclosure.

Referring to FIG. 8A, a display apparatus 100b for a vehicle (or simply referred to as "vehicle display apparatus") according to another embodiment of the present disclosure includes a signal processing device 170 and a first display 180, similarly to FIG. 7.

The operation of the signal processing device 170 in the vehicle display apparatus 100b can be performed as described in FIG. 7.

Meanwhile, the vehicle display apparatus 100b can further include an image distributor 177 configured to distribute an input image signal.

That is, the vehicle display apparatus 100b of FIG. 8A differs from that of FIG. 7 in that the vehicle display apparatus 100b controls the first display 180 and the second display 180h through the image distributor 177.

The first image signal distributed by the image distributor 177 is input to the driving controller 285, and the timing controller 232 in the driving controller 285 outputs a driving signal to the first display 180 based on the panel 210.

Meanwhile, the driving controller 285 outputs at least one tell-tale image stored in the memory 240 to the first display 180 including the panel 210.

The signal processing device 170 can output a first image signal for the first display 180 and a second image signal for the second display 180h.

Meanwhile, for displaying a plurality of tell-tale images on the first display 180, the signal processing device 170 can output signals corresponding to the plurality of tell-tale images.

The signals corresponding to the plurality of tell-tale images can be input to the driving controller 285, and the driving controller 285 can control the plurality of tell-tale images to be displayed on the first display 180 based on the signals corresponding to the plurality of tell-tale images.

Meanwhile, the second image signal distributed by the image distributor 177 can be input to the second display 180h.

Meanwhile, although a driving controller for the second display 180h is not separately illustrated in the figure, a second driving controller (not shown) for the second display 180h can be provided, similarly to the first display 180.

Meanwhile, the second driving controller (not shown) for the second display 180h can display at least one tell-tale image using a memory included therein. Accordingly, at least one tell-tale image can be displayed in a stable manner.

Alternatively, the tell-tale image for the second display 180h can be output from the driving controller 285.

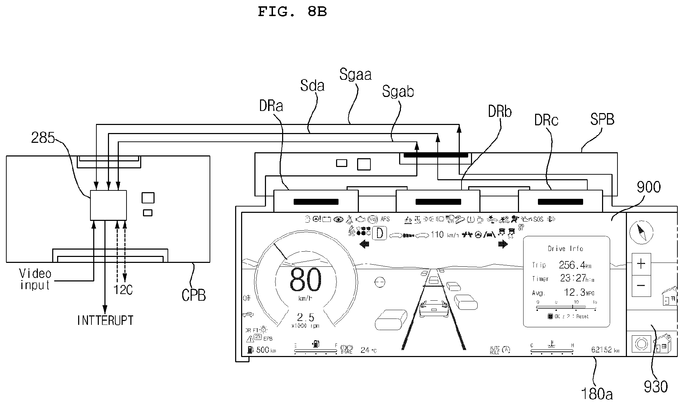

FIG. 8B is a diagram referred to in the description of FIG. 8A.

Referring to the figure, FIG. 8B illustrates that a vehicle information image is displayed on the first display 180 based on the operation of the driving controller.

Referring to FIG. 8B, the driving controller 285 is disposed in a control circuit board CPB. The driving controller 285 can receive an image signal from the signal processing device 170, and can output gate driving signals Sgaa and Sgab and a data signal Sda based on the image signal.

Drivers Dra, Drb, and Drc in a source circuit board SPB can receive the gate driving signals Sgaaa and Sgab and the data signal Sda from the driving controller 285, and can control a vehicle information image 900 to be displayed in a first area of the first display 180 based on the gate driving signals Sgaaa and Sgab and the data signal Sda.

Here, the vehicle information image 900 can include vehicle speed information, vehicle driving information, vehicle temperature information, a tell-tale image, or battery charging information.

In the figure, it is illustrated that vehicle speed information, vehicle driving information, and a plurality of tell-tale images are displayed in the vehicle information image 900.

Meanwhile, the tell-tale images displayed in the vehicle information image 900 can include at least one tell-tale image stored in the aforementioned memory 240 and a plurality of tell-tale images output from the signal processing device 170.

Meanwhile, the signal processing device 170 can be configured to display, in the first area of the first display 180, the at least one tell-tale image stored in the memory 240 and the plurality of tell-tale images output from the signal processing device 170.

At this time, the first area can correspond to a cluster area in which a cluster image is displayed.

Meanwhile, the signal processing device 170 can be configured to display a map image or an image based on a camera in a second area of the first display 180.

At this time, the second area can be an AVN area in which an image corresponding to an AVN display is displayed.

In the figure, it is illustrated that a map image 930 is displayed in the second area of the first display 180.

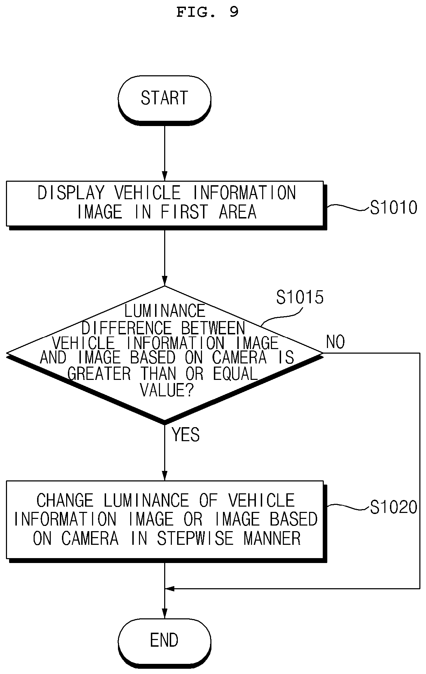

FIG. 9 is a flowchart illustrating a method of operating a display apparatus for a vehicle according to an embodiment of the present disclosure.

Referring to FIG. 9, the signal processing device 170 in the vehicle display apparatus 100 according to an embodiment of the present disclosure displays a vehicle information image in a first area of the display 180 (S1010).

For example, the signal processing device 170 can be configured to display a vehicle information image including vehicle speed information, vehicle driving information, vehicle temperature information, a tell-tale image, or battery charging information in the first area, which is a cluster area of the display 180.

Next, in a state in which the vehicle information image is displayed in the first area of the display 180, the signal processing device 170 determines whether a difference in luminance between the vehicle information image and an image based on a camera to be displayed in a second area of the display 180 is greater than or equal to a predetermined value (S1015). Upon determining that the difference in luminance is greater than or equal to the predetermined value, the signal processing device 170 changes the luminance of the vehicle information image or the image based on the camera (S1020). Accordingly, glare caused by the difference in luminance on the display 180 can be reduced.

For example, during nighttime driving, when the difference in luminance between the vehicle information image and the image based on the camera is greater than or equal to the predetermined value, the signal processing device 170 can be configured to increase the luminance of the image based on the camera in a stepwise manner so as to prevent glare caused by the image based on the camera. Accordingly, glare caused by the difference in luminance on the display 180 can be reduced.

Meanwhile, when the difference in luminance between the vehicle information image and the image based on the camera is greater than or equal to the predetermined value and the luminance of the image based on the camera is greater than the luminance of the vehicle information image, the signal processing device 170 can be configured to increase the luminance of the image based on the camera in a stepwise manner. Accordingly, glare caused by the difference in luminance on the display 180 can be reduced.

Meanwhile, when the difference in luminance between the vehicle information image and the image based on the camera is greater than or equal to the predetermined value and the luminance of the vehicle information image is greater than the luminance of the image based on the camera, the signal processing device 170 can be configured to increase the luminance of the vehicle information image in a stepwise manner. Accordingly, glare caused by the difference in luminance on the display 180 can be reduced.

Meanwhile, in step 1015 (S1015), in response to the difference in luminance between the vehicle information image and the image based on the camera to be displayed in the second area of the display 180 being less than the predetermined value, the signal processing device 170 can be configured to display the vehicle information image and the image based on the camera without changing the luminance thereof.

Meanwhile, the signal processing device 170 can change the luminance of the vehicle information image or the image based on the camera based on ambient illuminance around the vehicle.

For example, the signal processing device 170 can receive ambient illuminance information around the vehicle from the sensor device 760, and can change the luminance of the vehicle information image or the image based on the camera based on the ambient illuminance information around the vehicle. Accordingly, the luminance of the image can be changed in response to the ambient illuminance around the vehicle.

Specifically, as the ambient illuminance around the vehicle increases, the signal processing device 170 can be configured to increase the luminance of the vehicle information image or the image based on the camera.

Meanwhile, as the ambient illuminance around the vehicle decreases, the signal processing device 170 can be configured to decrease the vehicle information image or the image based on the camera.

Meanwhile, the signal processing device 170 can change the predetermined value based on the ambient illuminance around the vehicle.

For example, as the ambient illuminance around the vehicle decreases, glare occurring during image display may become more severe. Thus, the signal processing device 170 can be configured to lower the predetermined value so as to prevent glare. Accordingly, glare caused by the difference in luminance on the display can be reduced in response to the ambient illuminance around the vehicle.

Meanwhile, the signal processing device 170 can change the luminance of the vehicle information image or the image based on the camera based on a setting input.

For example, the signal processing device 170 can receive a luminance setting input from the input unit 110, and can change the luminance of the vehicle information image or the image based on the camera based on the luminance setting input. Accordingly, the luminance of the image can be changed in response to the luminance setting input.

Specifically, as the level of the luminance setting input increases, the signal processing device 170 can be configured to increase the luminance of the vehicle information image or the image based on the camera.

Meanwhile, as the level of the luminance setting input decreases, the signal processing device 170 can be configured to decrease the luminance of the vehicle information image or the image based on the camera.

Meanwhile, the signal processing device 170 can change the predetermined value based on the luminance setting input.

For example, as the level of the luminance setting input decreases, glare occurring during image display may become more severe. Thus, the signal processing device 170 can be configured to lower the predetermined value so as to prevent glare. Accordingly, glare caused by the difference in luminance on the display can be reduced in response to the luminance setting input.

Meanwhile, the signal processing device 170 can be configured to increase the luminance of the vehicle information image more during daytime than nighttime. Accordingly, visibility of the vehicle information image can be ensured during daytime.

Meanwhile, the signal processing device 170 can be configured to increase the luminance of a map image or a cameran image displayed in the second area more during daytime than nighttime. Accordingly, visibility of the map image or the cameran image can be ensured during daytime.

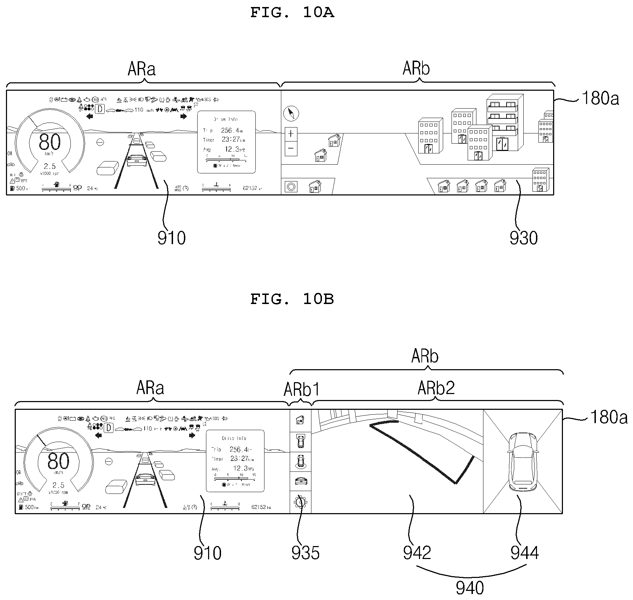

FIGS. 10A to 22C are diagrams referred to in the description of FIG. 9.

First, FIG. 10A illustrates that a vehicle information image 910 is displayed in a first area ARa of the first display 180a, and a map image 930 is displayed in a second area ARb.

For example, during daytime driving, the signal processing device 170 can be configured to display the vehicle information image 910 in the first area ARa of the first display 180a and the map image 930 in the second area ARb.

In this case, since a difference in luminance between the vehicle information image 910 and the map image 930 is less than a predetermined value, glare caused by the difference in luminance between the vehicle information image 910 and the map image 930 does not occur during daytime driving.

Next, FIG. 10B illustrates that the vehicle information image 910 is displayed in the first area ARa of the first display 180a, and an image based on a camera 940 is displayed in the second area ARb.

For example, when the vehicle is parked after daytime driving, in a state in which the vehicle information image 910 is displayed in the first area ARa of the first display 180a, the signal processing device 170 can be configured to switch the map image 930 displayed in the second area ARb to an image based on a camera so as to display the image based on the camera.

That is, during daytime parking, the signal processing device 170 can be configured to display the vehicle information image 910 in the first area ARa of the first display 180a and the image based on the camera 940 in the second area ARb.

In this case, since a difference in luminance between the vehicle information image 910 and the image based on the camera 940 is less than a predetermined value, glare caused by the difference in luminance between the vehicle information image 910 and the image based on the camera 940 does not occur during daytime parking.

Meanwhile, the signal processing device 170 can be configured to display camera-related menu information 935 in a partial area ARb1 of the second area ARb, and display the image based on the camera 940 including a cameran image 942 and an around-view image 944 based on the cameran image in another partial area ARb2 of the second area ARb. Accordingly, a graphical user interface for parking convenience can be provided.

Next, FIG. 10C illustrates that a vehicle information image 910b is displayed in the first area ARa of the first display 180a, and a map image 930b is displayed in the second area ARb.

For example, during nighttime driving, the signal processing device 170 can be configured to display the vehicle information image 910b in the first area ARa of the first display 180a and the map image 930b in the second area ARb.

Meanwhile, during nighttime driving, the signal processing device 170 can be configured to cause the luminance of the vehicle information image 910b displayed in the first area ARa of the first display 180a to be lower than the luminance of the vehicle information image 910 displayed during daytime driving.

Meanwhile, during nighttime driving, the signal processing device 170 can be configured to cause the luminance of the map image 930b displayed in the second area ARb of the first display 180a to be lower than the luminance of the map image 930 displayed during daytime driving.

In this case, since a difference in luminance between the vehicle information image 910b and the map image 930b is less than a predetermined value, glare caused by the difference in luminance between the vehicle information image 910b and the map image 930b does not occur during nighttime driving.

Next, FIG. 10D illustrates that the vehicle information image 910b is displayed in the first area ARa of the first display 180a, and an image based on a camera 940b is displayed in the second area ARb.

For example, when the vehicle is parked after nighttime driving, in a state in which the vehicle information image 910b is displayed in the first area ARa of the first display 180a, the signal processing device 170 can be configured to switch the map image 930b displayed in the second area ARb to an image based on a camera so as to display the image based on the camera.

That is, during nighttime parking, the signal processing device 170 can be configured to display the vehicle information image 910b in the first area ARa of the first display 180a and the image based on the camera 940b in the second area ARb.

In this case, a difference in luminance between the vehicle information image 910b and the image based on the camera 940b can be greater than or equal to a predetermined value.

For example, when the vehicle is parked in a bright parking space rather than a dark parking space during nighttime parking, the luminance of the image based on the camera 940b may be significantly higher than the luminance of the vehicle information image 910b.

Due to such a luminance difference, glare caused by the image based on the camera 940b may occur.

Therefore, according to an embodiment of the present disclosure, while displaying a vehicle information image in the first area ARa of the display 180, the signal processing device 170 changes, in response to a difference in luminance between the vehicle information image and an image based on a camera to be displayed in the second area ARb of the display 180 being greater than or equal to a predetermined value, the luminance of the vehicle information image or the image based on the camera.

For example, during nighttime driving, the signal processing device 170 can be configured to increase the luminance of the image based on the camera in a stepwise manner, in response to the difference in luminance between the vehicle information image and the image based on the camera being greater than or equal to the predetermined value.

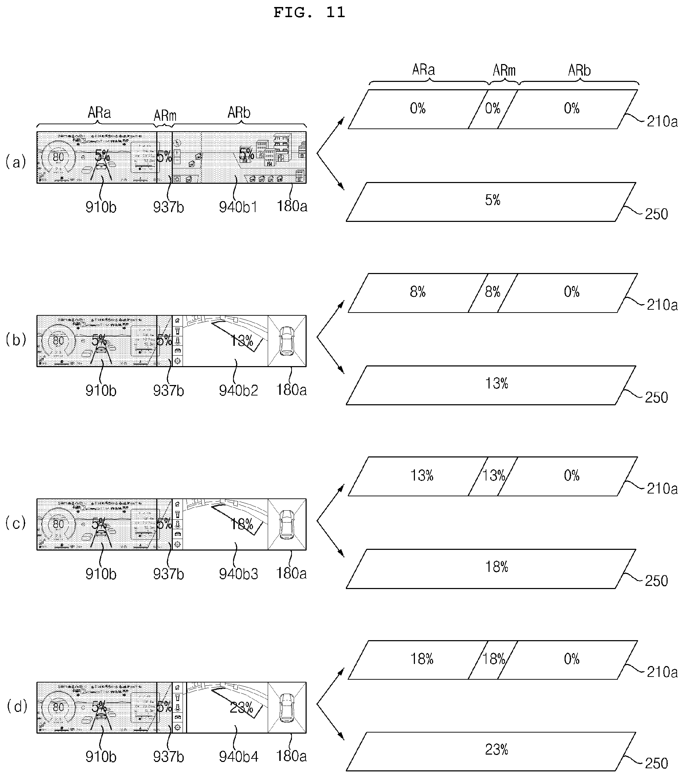

FIG. 11 illustrates that the luminance of an image based on a camera increases in a stepwise manner in a liquid crystal panel-based display.

Referring to the figure, as shown in (a) of FIG. 11, at a first time point, the signal processing device 170 can be configured to display a vehicle information image 910b in a first area ARa of the liquid crystal panel-based display 180a and a map image 940b1 in a second area ARb.

Meanwhile, the signal processing device 170 can be configured to display a predetermined image 937b between the first area ARa and the second area ARb.

For example, as shown in (a) of FIG. 11, at the first time point, the signal processing device 170 can be configured to set the brightness of the backlight 250 to 5% and to cause the transmittance blocking rate of the liquid crystal panel 210a to be 0%, 0%, and 0% in the first area ARa, a third area ARm, and the second area ARb, respectively.

That is, as shown in (a) of FIG. 11, at the first time point, the signal processing device 170 can be configured to set the brightness of the backlight 250 to 5% and to cause the transmittance of the liquid crystal panel 210a to be 100%, 100%, and 100% in the first area ARa, the third area ARm, and the second area ARb, respectively.

Accordingly, the liquid crystal panel-based display 180a can display images 910b, 937b, and 940b1 having luminance values of 5%, 5%, and 5% in the first area ARa, the third area ARm, and the second area ARb, respectively.

Meanwhile, in a state in which the vehicle information image 910b is displayed in the first area ARa of the display 180a and the map image 940b1 is displayed in the second area ARb, when the camera is activated and the image displayed in the second area ARb is switched to an image based on a camera, the signal processing device 170 determines whether a difference in luminance between the vehicle information image and the image based on the camera is greater than or equal to a predetermined value.

For example, when the luminance of the vehicle information image displayed in the first area ARa corresponds to 5% and the luminance of the image based on the camera to be displayed in the second area ARb corresponds to approximately 23%, the difference in luminance is greater than or equal to a predetermined value (e.g., 15%), and thus the signal processing device 170 can change the luminance of the vehicle information image or the image based on the camera to prevent glare.

Specifically, as shown in (b) of FIG. 11, at a second time point, the signal processing device 170 can be configured to set the brightness of the backlight 250 to 13% and to cause the transmittance blocking rate of the liquid crystal panel 210a to be 8%, 8%, and 0% in the first area ARa, the third area ARm, and the second area ARb, respectively.

That is, as shown in (b) of FIG. 11, at the second time point, the signal processing device 170 can be configured to set the brightness of the backlight 250 to 13% and to cause the transmittance of the liquid crystal panel 210a to be 92%, 92%, and 100% in the first area ARa, the third area ARm, and the second area ARb, respectively.

Accordingly, the liquid crystal panel-based display 180a can display images 910b, 937b, and 940b2 having luminance values of 5%, 5%, and 13% in the first area ARa, the third area ARm, and the second area ARb, respectively.

Next, as shown in (c) of FIG. 11, at a third time point, the signal processing device 170 can be configured to set the brightness of the backlight 250 to 18% and to cause the transmittance blocking rate of the liquid crystal panel 210a to be 13%, 13%, and 0% in the first area ARa, the third area ARm, and the second area ARb, respectively.

That is, as shown in (c) of FIG. 11, at the third time point, the signal processing device 170 can be configured to set the brightness of the backlight 250 to 18% and to cause the transmittance of the liquid crystal panel 210a to be 87%, 87%, and 100% in the first area ARa, the third area ARm, and the second area ARb, respectively.

Accordingly, the liquid crystal panel-based display 180a can display images 910b, 937b, and 940b3 having luminance values of 5%, 5%, and 18% in the first area ARa, the third area ARm, and the second area ARb, respectively.

Next, as shown in (d) of FIG. 11, at a fourth time point, the signal processing device 170 can be configured to set the brightness of the backlight 250 to 23% and to cause the transmittance blocking rate of the liquid crystal panel 210a to be 18%, 18%, and 0% in the first area ARa, the third area ARm, and the second area ARb, respectively.

That is, as shown in (d) of FIG. 11, at the fourth time point, the signal processing device 170 can be configured to set the brightness of the backlight 250 to 23% and to cause the transmittance of the liquid crystal panel 210a to be 82%, 82%, and 100% in the first area ARa, the third area ARm, and the second area ARb, respectively.

Accordingly, the liquid crystal panel-based display 180a can display images 910b, 937b, and 940b4 having luminance values of 5%, 5%, and 23% in the first area ARa, the third area ARm, and the second area ARb, respectively.

Ultimately, while displaying images (910b, 937b, and 940b1) having luminance values of 5%, 5%, and 5% in the first area ARa, the third area ARm, and the second area ARb, respectively, as illustrated in (a) of FIG. 11, the signal processing device 170 can be configured to display images (910b, 937b, 940b4) having luminance values of 5%, 5%, and 23% in the first area ARa, the third area ARm, and the second area ARb, respectively, as illustrated in (d) of FIG. 11, through the steps illustrated in (b) and (c) of FIG. 11, rather than directly displaying images (910b, 937b, 940b4) having luminance values of 5%, 5%, and 23%, respectively, as illustrated in (d) of FIG. 11. Accordingly, glare can be reduced.

Meanwhile, although FIG. 11 illustrates that the brightness of the backlight 250 is the same in the first area ARa, the third area ARm, and the second area ARb, local dimming can be performed.

That is, when a difference in luminance between the vehicle information image in the first area ARa of the display 180 and an image based on a camera to be displayed in the second area ARb of the display 180 is greater than or equal to a predetermined value, the signal processing device 170 can be configured to change light emitted from the backlight 250 disposed in the first area ARa or the second area ARb. Accordingly, glare caused by the difference in luminance on the display 180 can be reduced.

Meanwhile, during nighttime driving, the signal processing device 170 can be configured to increase, in a stepwise manner, light emitted from the backlight 250 disposed in the second area ARb in response to the difference in luminance between the vehicle information image and the image based on the camera being greater than or equal to the predetermined value. Accordingly, glare caused by the difference in luminance on the display 180 can be reduced.

Meanwhile, the signal processing device 170 can be configured to increase, in a stepwise manner, light emitted from the backlight 250 disposed in the second area ARb in response to the difference in luminance between the vehicle information image and the image based on the camera being greater than or equal to the predetermined value and the luminance of the image based on the camera being greater than the luminance of the vehicle information image.

For example, at a first time point, the signal processing device 170 can be configured to cause the brightness of the backlight 250 to be 5%, 5%, and 5% in the first area ARa, the third area ARm, and the second area ARb, respectively, and to cause transmittance of the liquid crystal panel 210a to be 100%, 100%, and 100%, in the first area ARa, the third area ARm, and the second area ARb respectively.

Similarly, the signal processing device 170 can be configured to cause, at a second time point, the brightness of the backlight 250 to be 5%, 5%, and 13% in the first area ARa, the third area ARm, and the second area ARb, respectively; to cause, at a third time point, the brightness of the backlight 250 to be 5%, 5%, and 18% in the first area ARa, the third area ARm, and the second area ARb, respectively; and to cause, at a fourth time point, the brightness of the backlight 250 to be 5%, 5%, and 23% in the first area ARa, the third area ARm, and the second area ARb, respectively.

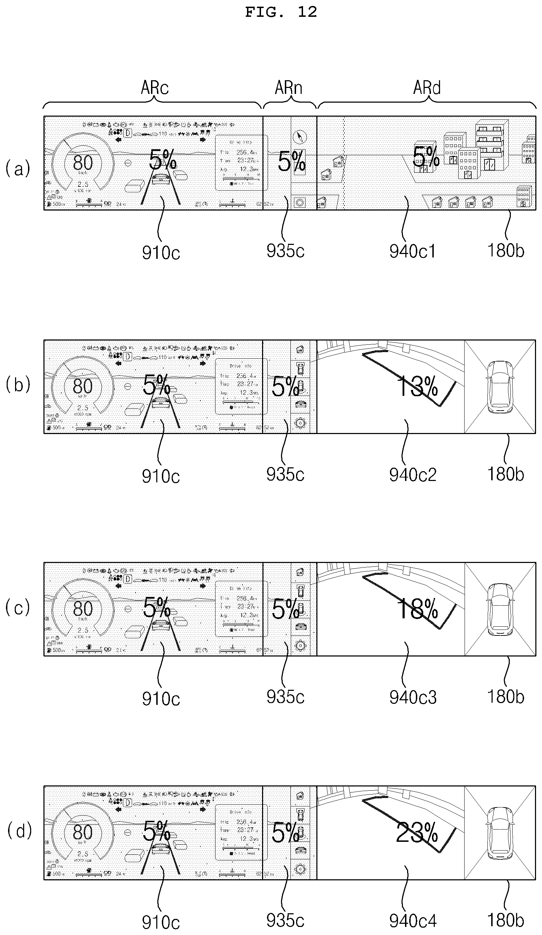

FIG. 12 illustrates that the luminance of an image based on a camera increases in a stepwise manner in an organic light emitting diode panel-based display.

Referring to the figure, as shown in (a) of FIG. 12, at a first time point, the signal processing device 170 can be configured to display a vehicle information image 910c in a first area ARc of a display 180b based on an organic light emitting diode (OLED) panel 210b and a map image 940c1 in a second area ARd.

Meanwhile, the signal processing device 170 can be configured to display a predetermined image 935c between the first area ARc and the second area ARd.

For example, as shown in (a) of FIG. 12, at the first time point, the signal processing device 170 can be configured to cause the brightness of the first area ARc, a third area ARn, and the second area ARd of the OLED panel 210b to be 5%, 5%, and 5%, respectively.

Accordingly, the display 180b based on the OLED panel 210b can display images 910c, 935c, and 940c1 having luminance values of 5%, 5%, and 5% in the first area ARc, the third area ARn, and the second area ARd, respectively.

Meanwhile, in a state in which the vehicle information image 910c is displayed in the first area ARc of the display 180b and the map image 940c1 is displayed in the second area ARd, when the camera is activated and the image displayed in the second area ARd is switched to an image based on a camera, the signal processing device 170 determines whether a difference in luminance between the vehicle information image and the image based on the camera is greater than or equal to a predetermined value.

For example, when the luminance of the vehicle information image displayed in the first area ARc corresponds to 5% and the luminance of the image based on the camera to be displayed in the second area ARd corresponds to approximately 23%, the difference in luminance is greater than or equal to a predetermined value (e.g., 15%), and thus the signal processing device 170 can change the luminance of the vehicle information image or the image based on the camera to prevent glare.

Specifically, as shown in (b) of FIG. 12, at a second time point, the signal processing device 170 can be configured to cause the brightness of the first area ARc, the third area ARn, and the second area ARd of the OLED panel 210b to be 5%, 5%, and 13%, respectively.

Accordingly, the display 180b based on the OLED panel 210b can display images 910c, 935c, and 940c2 having luminance values of 5%, 5%, and 13% in the first area ARc, the third area ARn, and the second area ARd, respectively.

Next, as shown in (c) of FIG. 12, at a third time point, the signal processing device 170 can be configured to cause the brightness of the first area ARc, the third area ARn, and the second area ARd of the OLED panel 210b to be 5%, 5%, and 18%, respectively.

Accordingly, the display 180b based on the OLED panel 210b can display images 910c, 935c, and 940c3 having luminance values of 5%, 5%, and 18% in first area ARc, the third area ARn, and the second area ARd, respectively.

Next, as shown in (d) of FIG. 12, at a fourth time point, the signal processing device 170 can be configured to cause the brightness of the first area ARc, the third area ARn, and the second area ARd of the OLED panel 210b to be 5%, 5%, and 23%, respectively.

Accordingly, the display 180b based on the OLED panel 210b can display images 910c, 935c, and 940c4 having luminance values of 5%, 5%, and 23% in the first area ARc, the third area ARn, and the second area ARd, respectively.

Ultimately, while displaying images (910c, 935c, 940c1) having luminance values of 5%, 5%, and 5% in the first area ARc, the third area ARn, and the second area ARd, respectively, as illustrated in (a) of FIG. 12, the signal processing device 170 can be configured to display images (910c, 935c, 940c4) having luminance values of 5%, 5%, and 23% in the first area ARc, the third area ARn, and the second area ARd, respectively, as illustrated in (d) of FIG. 12, through the steps illustrated in (b) and (c) of FIG. 12, rather than directly displaying images (910c, 935c, 940c4) having luminance values of 5%, 5%, and 23%, respectively, as illustrated in (d) of FIG. 12. Accordingly, glare can be reduced.

As described above, when a difference in luminance between the vehicle information image in the first area ARa of the display 180b and an image based on a camera to be displayed in the second area ARb of the display 180b is greater than or equal to a predetermined value, the signal processing device 170 can change the luminance of the vehicle information image or the image based on the camera displayed on the OLED panel 210b.

Meanwhile, during nighttime driving, the signal processing device 170 can be configured to increase, in a stepwise manner, the luminance of the image based on the camera displayed on the OLED panel 210b in response to the difference in luminance between the vehicle information image and the image based on the camera being greater than or equal to the predetermined value.

Meanwhile, the signal processing device 170 can be configured to increase, in a stepwise manner, the luminance of the image based on the camera displayed on the OLED panel 210b in response to the difference in luminance between the vehicle information image and the image based on the camera being greater than or equal to the predetermined value and the luminance of the image based on the camera being greater than the luminance of the vehicle information image.

FIG. 13A illustrates that a vehicle information image 910 is displayed in a first area ARa of the first display 180a, and a map image 930b is displayed in a second area ARb.

For example, during nighttime driving, the signal processing device 170 can be configured to display the vehicle information image 910b in the first area ARa of the first display 180a and the map image 930b in the second area ARb.

FIG. 13B illustrates that an image based on a camera 940b is displayed in the first area ARa of the first display 180a, and the vehicle information image 910b is displayed in the second area ARb.

Referring to the figure, when the vehicle is parked after nighttime driving, the signal processing device 170 can be configured to display the image based on the camera 940b in the first area ARa of the first display 180a and the vehicle information image 910b in the second area ARb.

Meanwhile, unlike the figure, when the vehicle is parked after nighttime driving, the signal processing device 170 can be configured to display the image based on the camera 940b in the first area ARa of the first display 180a and the map image 930b in the second area ARb.

At this time, a difference in luminance between the image based on the camera 940b and the vehicle information image 910b can be greater than or equal to a predetermined value.

For example, when the vehicle is parked in a bright parking space, rather than a dark parking space, during nighttime parking, the luminance of the image based on the camera 940b may be significantly higher than the luminance of the vehicle information image 910b.

Therefore, according to another embodiment of the present disclosure, in a state in which the vehicle information image 910b is displayed in the first area ARa of the display 180a and the map image 930b is displayed in the second area ARb, the signal processing device 170 changes, in response to a difference in luminance between an image based on a camera to be displayed in the first area ARa in place of the vehicle information image and the map image or the vehicle information image being greater than or equal to a predetermined value, the luminance of the image based on the camera, the map image, or the vehicle information image.

That is, during nighttime driving, when the difference in luminance between the map image 930b and the image based on the camera is greater than or equal to the predetermined value, the signal processing device 170 can be configured to display the image based on the camera by increasing the luminance thereof in a stepwise manner, rather than directly displaying the image based on the camera 940b in the first area ARa of the first display 180a, as illustrated in FIG. 13B. Accordingly, glare caused by the difference in luminance on the display 180a can be reduced.

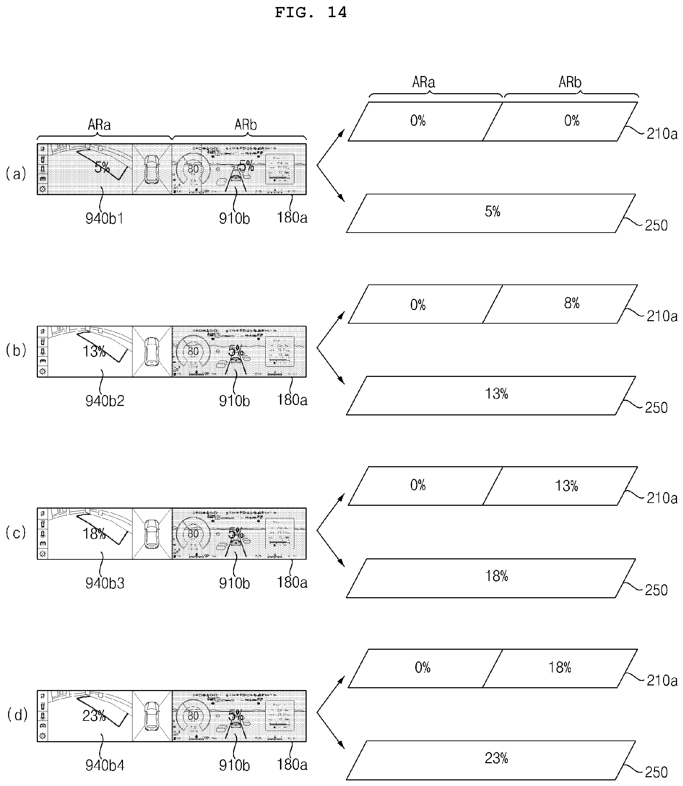

FIG. 14 illustrates that the luminance of an image based on a camera increases in a stepwise manner in a liquid crystal panel-based display.

Referring to the figure, as shown in (a) of FIG. 14, at a first time point, the signal processing device 170 can be configured to display a vehicle information image 940b1 in a first area ARa of the liquid crystal panel-based display 180a and a vehicle information image 910b in a second area ARb.

For example, as shown in (a) of FIG. 14, at the first time point, the signal processing device 170 can be configured to set the brightness of the backlight 250 to 5% and to cause the transmittance blocking rate of the liquid crystal panel 210a to be 0% and 0% in the first area ARa and the second area ARb, respectively.

That is, as shown in (a) of FIG. 14, at the first time point, the signal processing device 170 can be configured to set the brightness of the backlight 250 to 5% and to cause the transmittance of the liquid crystal panel 210a to be 100% and 100% in the first area ARa and the second area ARb, respectively.

Accordingly, the liquid crystal panel-based display 180a can display images 940b1 and 910b having luminance values of 5% and 5% in the first area ARa and the second area ARb, respectively.

Meanwhile, as shown in (b) of FIG. 14, at a second time point, the signal processing device 170 can be configured to set the brightness of the backlight 250 to 13% and to cause the transmittance blocking rate of the liquid crystal panel 210a to be 0% and 8% in the first area ARa and the second area ARb, respectively.

That is, as shown in (b) of FIG. 14, at the second time point, the signal processing device 170 can be configured to set the brightness of the backlight 250 to 13% and to cause the transmittance of the liquid crystal panel 210a to be 100% and 92% in the first area ARa and the second area ARb, respectively.

Accordingly, the liquid crystal panel-based display 180a can display images 940b2 and 910b having luminance values of 13% and 5% in the first area ARa and the second area ARb, respectively.

Next, as shown in (c) of FIG. 14, at a third time point, the signal processing device 170 can be configured to set the brightness of the backlight 250 to 18% and to cause the transmittance blocking rate of the liquid crystal panel 210a to be 0% and 13% in the first area ARa and the second area ARb, respectively.

That is, as shown in (c) of FIG. 14, at the third time point, the signal processing device 170 can be configured to set the brightness of the backlight 250 to 18% and to cause the transmittance of the liquid crystal panel 210a to be 100% and 87% in the first area ARa and the second area ARb, respectively.

Accordingly, the liquid crystal panel-based display 180a can display images 940b3 and 910b having luminance values of 18% and 5% in the first area ARa and the second area ARb, respectively.

Next, as shown in (d) of FIG. 14, at a fourth time point, the signal processing device 170 can be configured to set the brightness of the backlight 250 to 23% and to cause the transmittance blocking rate of the liquid crystal panel 210a to be 0% and 18% in the first area ARa and the second area ARb, respectively.

That is, as shown in (d) of FIG. 14, at the fourth time point, the signal processing device 170 can be configured to set the brightness of the backlight 250 to 23% and to cause the transmittance of the liquid crystal panel 210a to be 100% and 82% in the first area ARa and the second area ARb, respectively.

Accordingly, the liquid crystal panel-based display 180a can display images 940b4 and 910b having luminance values of 23% and 5% in the first area ARa and the second area ARb, respectively.

Ultimately, while displaying images (940b1, 910b) having luminance values of 5% and 5% in the first area ARa and the second area ARb, respectively, as illustrated in (a) of FIG. 14, the signal processing device 170 can be configured to display images (940b4, 910b) having luminance values of 23% and 5% in the first area ARa and the second area ARb, respectively, as illustrated in (d) of FIG. 14, through the steps illustrated in (b) and (c) of FIG. 14, rather than directly displaying images (940b4, 910b) having luminance values of 23% and 5%, respectively, as illustrated in (d) of FIG. 14. Accordingly, glare can be reduced.

Meanwhile, although FIG. 14 illustrates that the brightness of the backlight 250 is the same in the first area ARa and the second area ARb, local dimming can be performed.

That is, when a difference in luminance between an image based on a camera to be displayed in the first area ARa of the display 180 and a vehicle information image to be displayed in the second area ARb of the display 180 is greater than or equal to a predetermined value, the signal processing device 170 can be configured vary light emitted from the backlight 250 disposed in the first area ARa or the second area ARb. Accordingly, glare caused by the difference in luminance on the display 180 can be reduced.

Meanwhile, during nighttime driving, the signal processing device 170 can be configured to increase, in a stepwise manner, light emitted from the backlight 250 disposed in the first area ARa in response to the difference in luminance between the vehicle information image and the image based on the camera being greater than or equal to the predetermined value. Accordingly, glare caused by the difference in luminance on the display 180 can be reduced.

Meanwhile, the signal processing device 170 can be configured to increase, in a stepwise manner, light emitted from the backlight 250 disposed in the first area ARa in response to the difference in luminance between the vehicle information image and the image based on the camera being greater than or equal to the predetermined value and the luminance of the image based on the camera being greater than the luminance of the vehicle information image.

For example, at a first time point, the signal processing device 170 can be configured to cause the brightness of the backlight 250 to be 5% and 5% in the first area ARa and the second area ARb, respectively, and to cause the transmittance of the liquid crystal panel 210a to be 100% and 100% in the first area ARa and the second area ARb, respectively.

Similarly, the signal processing device 170 can configured to cause, at a second time point, the brightness of the backlight 250 to be 13% and 5% in the first area ARa and the second area ARb, respectively; to cause, at a third time point, the brightness of the backlight 250 to be 18% and 5% in the first area ARa and the second area ARb, respectively; and to cause, at a fourth time point, the brightness of the backlight 250 to be 23% and 5% in the first area ARa and the second area ARb, respectively.

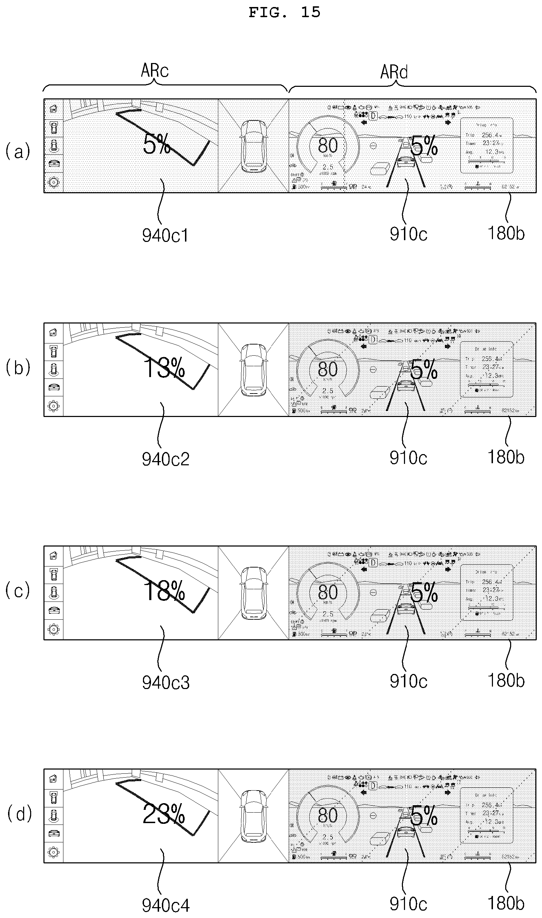

FIG. 15 illustrates that the luminance of an image based on a camera increases in a stepwise manner in an organic light emitting panel-based display.

Referring to the figure, as shown in (a) of FIG. 15, at a first time point, the signal processing device 170 can be configured to display an image based on a camera 940c1 in a first area ARc of the display 180b based on the OLED panel 210b and a vehicle information image 910c in a second area ARd.

For example, as shown in (a) of FIG. 15, at the first time point, the signal processing device 170 can be configured to cause the brightness of the first area ARc and the second area ARd of the OLED panel 210b to be 5% and 5%, respectively.

Accordingly, the display 180b based on the OLED panel 210b can display images 940c1 and 910c having luminance values of 5% and 5% in the first area ARc and the second area ARd, respectively.

Meanwhile, as shown in (b) of FIG. 15, at a second time point, the signal processing device 170 can be configured to cause the brightness of the first area ARc and the second area ARd of the OLED panel 210b to be 13% and 5%.

Accordingly, the display 180b based on the OLED panel 210b can display images 940c2 and 910c having luminance values of 13% and 5% in the first area ARc and the second area ARd, respectively.

Next, as shown in (c) of FIG. 15, at a third time point, the signal processing device 170 can be configured to cause the brightness of the first area ARc and the second area ARd of the OLED panel 210b to be 18% and 5%, respectively.

Accordingly, the display 180b based on the OLED panel 210b can display images 940c3 and 910c having luminance values of 18% and 5% in the first area ARc and the second area ARd, respectively.

Next, as shown in (d) of FIG. 15, at a fourth time point, the signal processing device 170 can control the brightness of the first area ARc and the second area ARd of the OLED panel 210b to be 23% and 5%, respectively.

Accordingly, the display 180b based on the OLED panel 210b can display images 940c4 and 910c having luminance values of 23% and 5% in the first area ARc and the second area ARd, respectively.

Ultimately, while displaying images (940c1, 910c) having luminance values of 5% and 5% in the first area ARc and the second area ARd, respectively, as illustrated in (a) of FIG. 15, the signal processing device 170 can be configured to display images (940c4, 910c) having luminance values of 23% and 5%, respectively, as illustrated in (d) of FIG. 15, through the steps of (b) and (c) of FIG. 15, rather than directly displaying images (940c4, 910c) with luminance values of 23% and 5%, respectively, as illustrated in (d) of FIG. 15. Accordingly, glare can be reduced.

As described above, when a difference in luminance between an image based on a camera to be displayed in the first area ARa of the display 180b and a vehicle information image to be displayed in the second area ARb of the display 180 is greater than or equal to a predetermined value, the signal processing device 170 can change the luminance of the vehicle information image or the image based on the camera displayed on the OLED panel 210b.

Meanwhile, during nighttime driving, the signal processing device 170 can be configured to increase the luminance of the image based on the camera displayed on the OLED panel 210b in a stepwise manner, in response to the difference in luminance between the vehicle information image and the image based on the camera being greater than or equal to the predetermined value.

Meanwhile, the signal processing device 170 can be configured to increase, in a stepwise manner, the luminance of the image based on the camera displayed on the OLED panel 210b in response to the difference in luminance between the vehicle information image and the image based on the camera being greater than or equal to the predetermined value and the luminance of the image based on the camera being greater than the luminance of the vehicle information image. Accordingly, glare caused by the difference in luminance on the display 180b can be reduced.

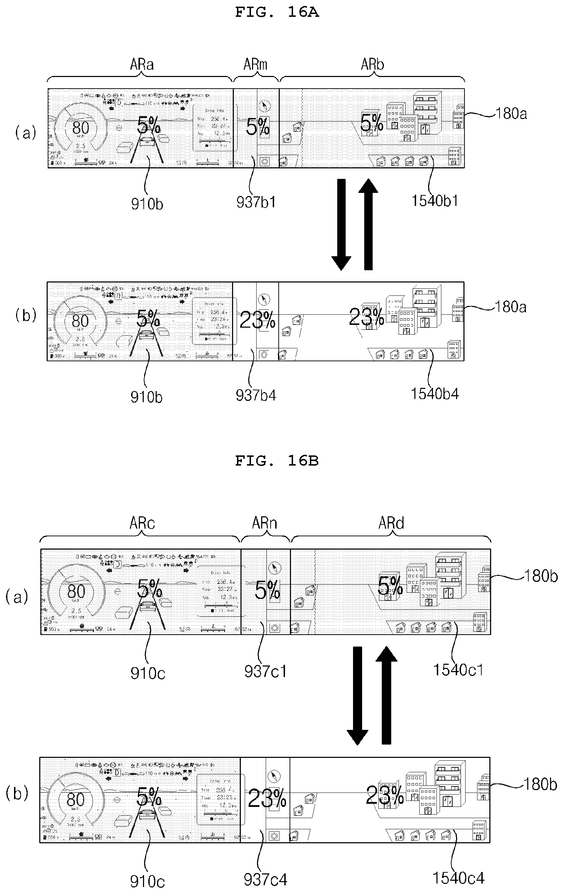

FIG. 16A illustrates an example of changing luminance of a part of each area in the liquid crystal panel-based display 180a.

Referring to the figure, as shown in (a) of FIG. 16A, at a first time point, the signal processing device 170 can be configured to display a vehicle information image 910b, a predetermined image 937b1, and a map image 1540b1 having luminance values of 5%, 5%, and 5% in the first area ARa, the third area ARm, and the second area ARb of the liquid crystal panel-based display 180a, respectively.

Next, as shown in (b) of FIG. 16A, after the first time point, the signal processing device 170 can be configured to display a vehicle information image 910b, a predetermined image 937b4, and a map image 1540b4 having luminance values of 5%, 23%, and 23% in the first area ARa, the third area ARm, and the second area ARb of the liquid crystal panel-based display 180a, respectively.

In this case, the signal processing device 170 can be configured to increase, in a stepwise manner, the luminance of the predetermined image 937b4 and the map image 1540b4 displayed in the third area ARm and the second area ARb, rather than directly switching from (a) of FIG. 16A to (b) of FIG. 16A.

For example, the signal processing device 170 can be configured to display, at a second time point after the first time point, a vehicle information image 910b, a predetermined image 937b2, and a map image 1540b2 having luminance values of 5%, 13%, and 13% in the first area ARa, the third area ARm, and the second area ARb of the liquid crystal panel-based display 180a, respectively; to display, at a third time point after the second time point, a vehicle information image 910b, a predetermined image 937b3, and a map image 1540b3 having luminance values of 5%, 18%, and 18% in the first area ARa, the third area ARm, and the second area ARb of the liquid crystal panel-based display 180a, respectively; and to display, at a fourth time point after the third time point, the images as illustrated in (b) of FIG. 16A. Accordingly, glare caused by the difference in luminance on the display 180a can be reduced.

FIG. 16B illustrates an example of changing luminance of a part of each area in the OLED panel-based display 180b.

Referring to the figure, as shown in (a) of FIG. 16B, at a first time point, the signal processing device 170 can be configured to display a vehicle information image 910b, a predetermined image 937b1, and a map image 1540b1 having luminance values of 5%, 5%, and 5% in the first area ARc, the third area ARn, and the second area ARd of the OLED panel-based display 180b, respectively.

Next, as shown in (b) of FIG. 16B, after the first point, the signal processing device 170 can be configured to display a vehicle information image 910b, a predetermined image 937b4, and a map image 1540b4 having luminance values of 5%, 23%, and 23% in the first area ARc, the third area ARn, and the second area ARd of the OLED panel-based display 180b, respectively.

In this case, the signal processing device 170 can be configured to increase, in a stepwise manner, the luminance of the predetermined image 937b4 and the map image 1540b4 displayed in the third area ARn and the second area ARd, rather than directly switching from (a) of FIG. 16B to (b) of FIG. 16B.

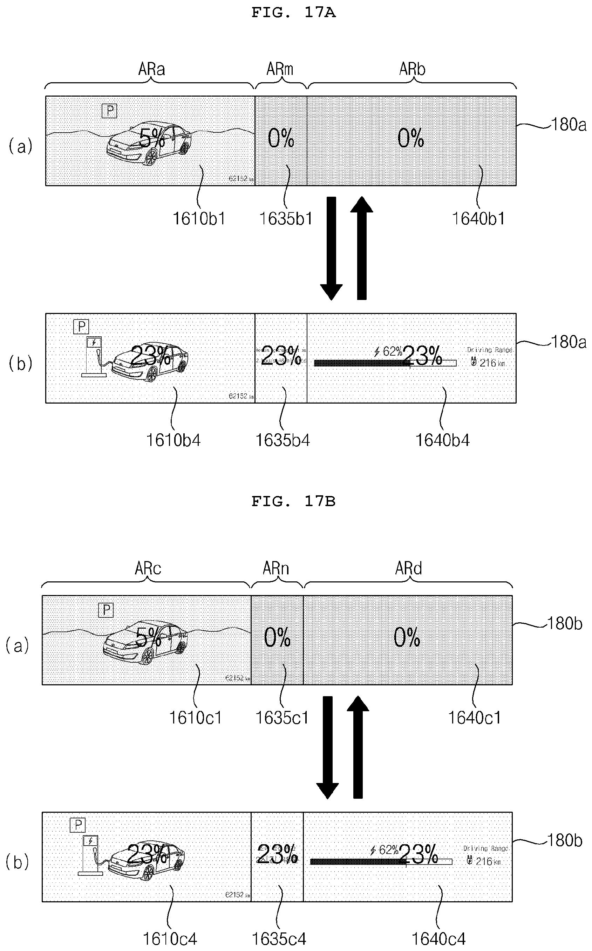

FIG. 17A illustrates another example of changing luminance of a part of each area in the liquid crystal panel-based display 180a.

Referring to the figure, as shown in (a) of FIG. 17A, at a first time point, the signal processing device 170 can be configured to display a vehicle power-off image 1610b1 having a luminance of 5% in the first area ARa among the first area ARa, the third area ARm, and the second area ARb of the liquid crystal panel-based display 180a.

Next, as shown in (b) of FIG. 17A, when the vehicle is powered on after the first time point, the signal processing device 170 can be configured to display vehicle charging information images 1610b4, 1635b4, and 1640b4 having luminance values of 23%, 23%, and 23% in the first area ARa, the third area ARm, and the second area ARb of the liquid crystal panel-based display 180a, respectively.

In this case, the signal processing device 170 can be configured to increase, in a stepwise manner, the luminance of the vehicle charging information images 1610b1, 1635b1, and 1640b1 displayed in the first area ARa, the third area ARm, and the second area ARb, rather than directly switching from (a) of FIG. 17A to (b) of FIG. 17A.

FIG. 17B illustrates another example of changing luminance of a part of each area in the OLED panel-based display 180b.

Referring to the figure, as shown in (a) of FIG. 17B, at a first time, the signal processing device 170 can be configured to display a vehicle power-off image 1610c1 having a luminance of 5% in the first area ARc among the first area ARc, the third area ARn, and the second area ARd of the OLED panel-based display 180b.

Next, as shown in (b) of FIG. 17B, when the vehicle is powered on after the first time point, the signal processing device 170 can be configured to display vehicle charging information images 1610c4, 1635c4, and 1640c4 having luminance values of 23%, 23%, and 23% in the first area ARc, the third area ARn, and the second area ARd of the OLED panel-based display 180b, respectively.

In this case, the signal processing device 170 can be configured to increase, in a stepwise manner, the luminance of the vehicle charging information images 1610c1, 1635c1, and 1640c1 displayed in the first area ARc, the third area ARn, and the second area ARd, rather than directly switching from (a) of FIG. 17B to (b) of FIG. 17B.

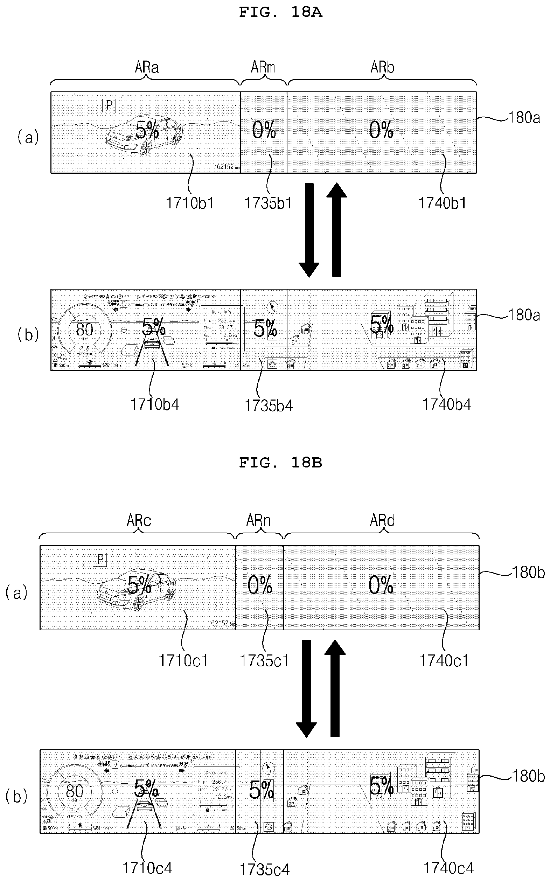

FIG. 18A illustrates yet another example of changing luminance of a part of each area in the liquid crystal-based panel 180a.

Referring to the figure, as shown in (a) of FIG. 18A, at a first time point, the signal processing device 170 can be configured to display a vehicle power-off image 1710b1 having a luminance of 5% in the first area ARa among the first area ARa, the third area ARm, and the second area ARb of the liquid crystal panel-based display 180a.

Next, as shown in (b) of FIG. 18A, when the vehicle is powered on after the first time point, the signal processing device 170 can be configured to display a vehicle information image 1710b4, a predetermined image 1735b4, and a map image 1740b4 having luminance values of 5%, 5%, and 5% in the first area ARa, the third area ARm, and the second area ARb of the liquid crystal panel-based display 180a, respectively.

In this case, the signal processing device 170 can be configured to directly switch from (a) of FIG. 18A to (b) of FIG. 18A.

FIG. 18B illustrates yet another example of changing luminance of a part of each area in the OLED panel-based display 180b.

Referring to the figure, as shown in (a) of FIG. 18B, at a first time point, the signal processing device 170 can be configured to display a vehicle power-off image 1710c1 having a luminance of 5% in the first area ARc among the first area ARc, the third area ARn, and the second area ARd of the OLED panel-based display 180b.

Next, as shown in (b) of FIG. 18B, when the vehicle is powered on after the first time point, the signal processing device 170 can be configured to display a vehicle information image 1710c4, a predetermined image 1735c4, and a map image 1740c4 having luminance values of 5%, 5%, and 5% in the first area ARc, the third area ARn, and the second area ARd of the OLED panel-based display 180b, respectively.

In this case, the signal processing device 170 can be configured to directly switch from (a) of FIG. 18B to (b) of FIG. 18B.

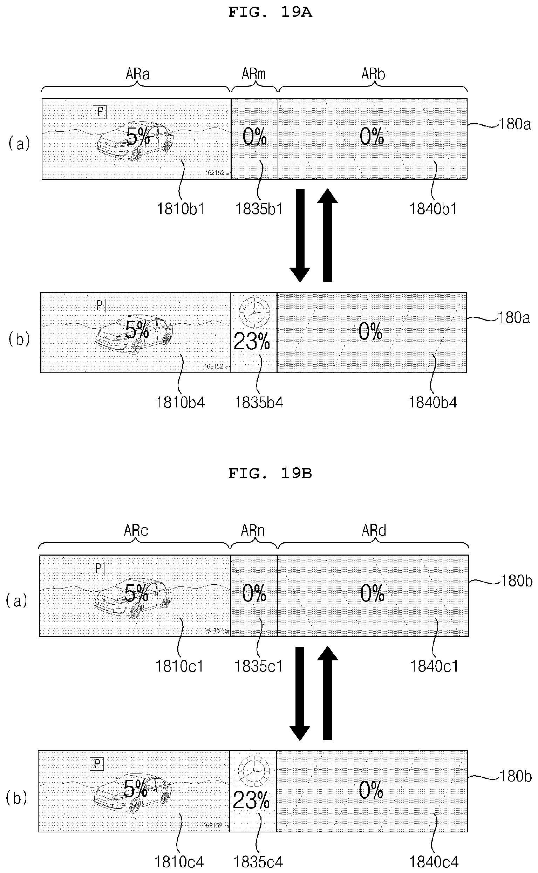

FIG. 19A illustrates yet another example of changing luminance of a part of each area in the liquid crystal panel-based display 180a.

Referring to the figure, as shown in (a) of FIG. 19A, at a first time point, the signal processing device 190 can be configured to display a vehicle power-off image 1810b1 having a luminance of 5% in the first area ARa among the first area ARa, the third area ARm, and the second area ARb of the liquid crystal panel-based display 180a.

Next, as shown in (b) of FIG. 19A, when the vehicle is powered on after the first time point, the signal processing device 190 can be configured to display a vehicle charging information image 1810b4 and a clock image 1835b4 having luminance values of 5% and 23% in the first area ARa and the third area ARm of the liquid crystal panel-based display 180a, respectively.

In this case, rather than directly switching from (a) of FIG. 19A to (b) of FIG. 19A, the signal processing device 190 can be configured to increase, in a stepwise manner, the luminance of the clock image 1835b4 displayed in the third area ARm among the first area ARa, the third area ARm, and the second area ARb.

FIG. 19B illustrates yet another example of changing luminance of a part of each area in the OLED panel-based display 180b.

Referring to the figure, as shown in (a) of FIG. 19B, at a first time point, the signal processing device 190 can be configured to display a vehicle power-off image 1810c1 having a luminance of 5% in the first area ARc among the first area ARc, the third area ARn, and the second area ARd of the OLED panel-based display 180b.

Next, as shown in (b) of FIG. 19B, when the vehicle is powered on after the first time point, the signal processing device 190 can be configured to display a vehicle charging information image 1810c4 and a clock image 1835c4 having luminance values of 5% and 23% in the first area ARc and the third area ARn of the OLED panel-based display 180b, respectively.

In this case, rather than directly switching from (a) of FIG. 19B to (b) of FIG. 19B, the signal processing device 190 can be configured to increase, in a stepwise manner, the luminance of the clock image 1835c4 displayed in the third area ARn among the first area ARc, the third area ARn, and the second area ARd.

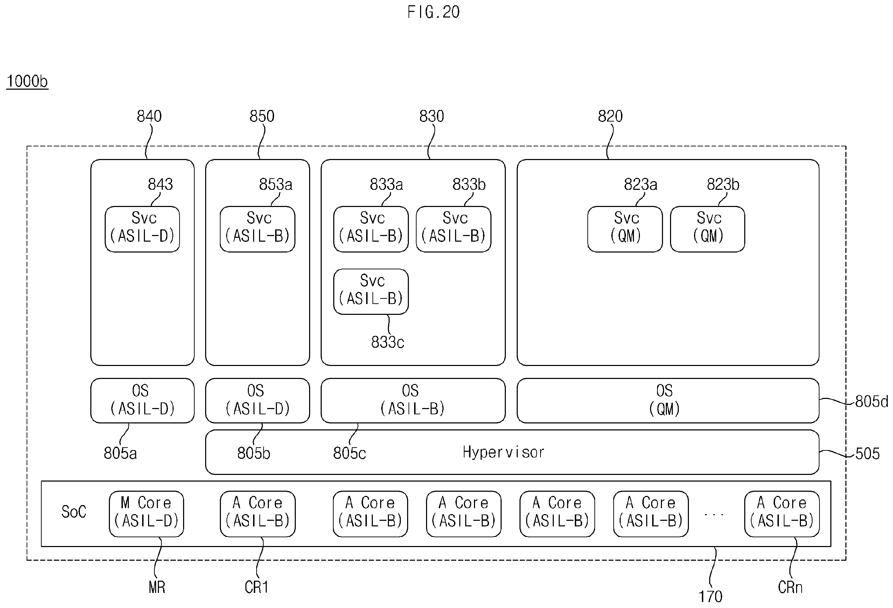

FIG. 20 illustrates an example of an internal block diagram of a signal processing device according to an embodiment of the present disclosure.

Referring to FIG. 20, a display apparatus 1000b for a vehicle (or simply referred to as "vehicle display apparatus") according to an embodiment of the present disclosure includes a signal processing device 170.

In the figure, it is illustrated that the signal processing device 170a executes a hypervisor 505 and executes a plurality of virtual machines 820 to 850 on the hypervisor 505 according to the automotive safety integrity level (Automotive SIL; ASIL).

Meanwhile, the signal processing device 170 according to an embodiment of the present disclosure can have a plurality of processor cores (CR1 to CRn, MR).

Meanwhile, a part (CR1 to CRn) of the plurality of processor cores (CR1 to CRn, MR) can operate based on the hypervisor 505, and the hypervisor 505 can execute the plurality of virtual machines 820 to 850.

Meanwhile, another part (MR) of the plurality of processor cores (CR1 to CRn, MR) can execute an operating system 805a corresponding to a first safety level such as ASIL D, which is the highest safety level, without executing the hypervisor 505, and can execute a fourth virtual machine 840 on the operating system 805a.

Meanwhile, the fourth virtual machine 840 can execute an application corresponding to the first safety level, such as ASIL D, or a microservice 843 corresponding to the application that corresponds to the first safety level. Accordingly, the application or the microservice 843 corresponding to the first safety level can be stably performed.

Meanwhile, a first processor core CR1 among the plurality of processor cores (CR1 to CRn, MR) can execute the hypervisor 505, execute an operating system 805b on the hypervisor 505, and execute a first virtual machine 850 on the operating system 805b.

Meanwhile, the first virtual machine 850 can execute an application corresponding to a second safety level, such as ASIL B, or a microservice 853a corresponding to the application corresponding to the second safety level. Accordingly, the application or the microservice 853a corresponding to the second safety level can be stably performed.

Meanwhile, the second safety level can be a safety level lower than the first safety level.

Meanwhile, among the plurality of processor cores (CR1 to CRn, MR), a second processor core CR2 and a third processor core CR3 can execute the hypervisor 505, execute an operating system 805c corresponding to the second safety level such as ASIL B on the hypervisor 505, and execute a second virtual machine 830 on the operating system 805c.

Meanwhile, the second virtual machine 830 can execute a third application corresponding to the second safety level, such as ASIL B, or a microservice 833a to 833c corresponding to the third application corresponding to the second safety level, on the operating system 805c corresponding to the second safety level. Accordingly, the application or the microservice 833a to 833c corresponding to the second safety level can be stably performed.

Meanwhile, among the plurality of processor cores (CR1 to CRn, MR), remaining processor cores (CR4 to CRn) can execute the hypervisor 505, execute an operating system 805d corresponding to a third safety level, such as QM, on the hypervisor 505, and execute a third virtual machine 820 on the operating system 805d.

Meanwhile, the third virtual machine 820 can execute a fourth application corresponding to the third safety level, such as QM, or a microservice 823a to 823b corresponding to the fourth application, on the operating system 805d corresponding to the third safety level, which is lower than the second safety level. Accordingly, the application or the microservice 823a to 823b corresponding to the third safety level can be stably performed.

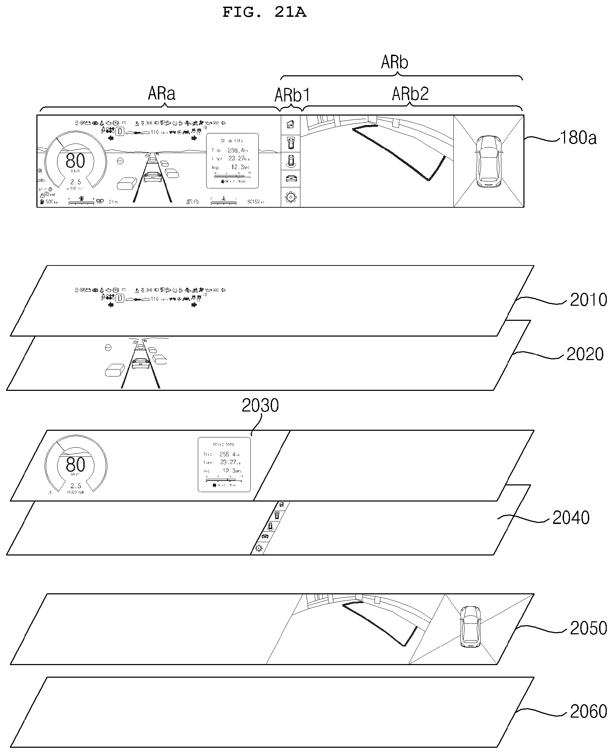

FIGS. 21A to 21C are diagrams referred to in the description of the operation of the signal processing device of FIG. 20.

FIG. 21A illustrates that images are displayed in respective areas of the liquid crystal panel-based display 180a.

Referring to FIG. 21A, the signal processing device 170 can display a vehicle information image in the first area ARa of the display 180a and an image based on a camera in the second area ARb.

Meanwhile, while displaying the vehicle information image in the first area ARa of the display 180a, the signal processing device 170 can be configured to overlay a second layer 2010 including a tell-tale image on a first layer 2020 including surrounding vehicle information.

Meanwhile, the signal processing device 170 can be configured to cause a safety level of the first layer 2020 including the surrounding vehicle information to be different from a safety level of the second layer 2010 including the tell-tale image.

In particular, the signal processing device 170 can be configured to cause the safety level of the second layer 2010 including the tell-tale image to be higher than the safety level of the first layer 2020 including the surrounding vehicle information.

Specifically, the first layer 2020 including the surrounding vehicle information can be generated by the fourth virtual machine 840 of the signal processing device 170 in correspondence with the first safety level, and the second layer 2010 including the tell-tale image can be generated by the first virtual machine 850 or the second virtual machine 830 in correspondence with the second safety level. Accordingly, layers can be separately displayed according to the safety levels.

Meanwhile, the signal processing device 170 can be configured to overlay the first layer 2020 and the second layer 2010 on a third layer 2030 including vehicle speed information and the like.

Meanwhile, the signal processing device 170 can be configured to overlay the second layer 2010 and the first layer 2020 on a fourth layer 2050 including an image based on a camera.

Meanwhile, while displaying the image based on the camera in the second area ARb of the display 180a, the signal processing device 170 can be configured to overlay a fifth layer 2040 including camera-related menu information on the fourth layer 2050 including the image based on the camera such as a cameran image and an around-view image.

Meanwhile, the fourth layer 2050 including the image based on the camera may be generated by the second virtual machine 830 of the signal processing device 170, and the fifth layer 2040 including the camera-related menu information may be generated by the third virtual machine 840. Accordingly, layers can be separately displayed.

Thus, the fourth layer 2050, the fifth layer 2040, the third layer 2030, the first layer 2020, and the second layer 2010 can be sequentially overlaid on a backlight 2060.

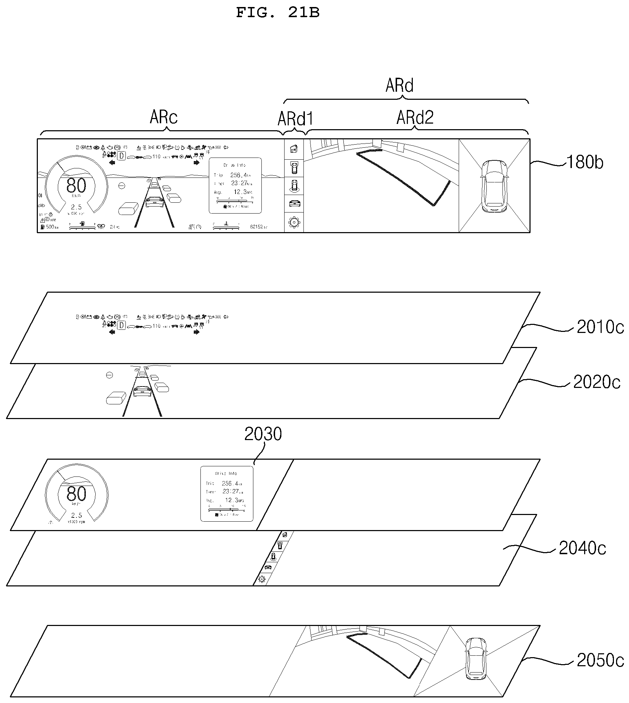

FIG. 21B illustrates that images are displayed in respective areas of the OLED panel-based display 180b.

Referring to FIG. 21B, the signal processing device 170 can display a vehicle information image in the first area ARc of the display 180b and an image based on a camera in the second area ARd.

Meanwhile, while displaying the vehicle information image in the first area ARc of the display 180b, the signal processing device 170 can be configured to overlay a second layer 2010c including a tell-tale image on a first layer 2020c including surrounding vehicle information.

Meanwhile, the signal processing device 170 can be configured to cause a safety level of the first layer 2020c including the surrounding vehicle information to be different from a safety level of the second layer 2010c including the tell-tale image.

In particular, the signal processing device 170 can be configured to cause the safety level of the second layer 2010c including the tell-tale image to be higher than the safety level of the first layer 2020c including the surrounding vehicle information.

Specifically, the first layer 2020c including the surrounding vehicle information can be generated by the fourth virtual machine 840 of the signal processing device 170 in correspondence with the first safety level, and the second layer 2010c including the tell-tale image can be generated by the first virtual machine 850 or the second virtual machine 830 in correspondence with the second safety level. Accordingly, layers can be separately displayed according to the safety levels.

Meanwhile, the signal processing device 170 can be configured to overlay the first layer 2020c and the second layer 2010c on a third layer 2030c including vehicle speed information and the like.

Meanwhile, while displaying the image based on the camera in the second area ARd of the display 180b, the signal processing device 170 can be configured to overlay a fifth layer 2040c including camera-related menu information on a fourth layer 2050c including an image based on a camera such as a cameran image and an around-view image.

Meanwhile, the fourth layer 2050c including the image based on the camera can be generated by the second virtual machine 830 of the signal processing device 170, and the fifth layer 2040c including the camera-related menu information can be generated by the third virtual machine 840. Accordingly, layers can be separately displayed.

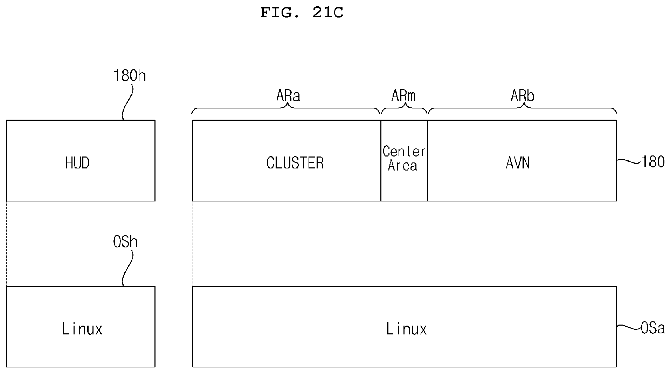

FIG. 21C illustrates operating systems for a plurality of displays.

Referring to FIG. 21C, the signal processing device 170 can execute a first operating system OSa for the first display 180, and can be configured to display corresponding images in the first area ARa, the third area ARm, and the second area ARb, respectively, through a plurality of virtual machines and the like.

Meanwhile, the signal processing device 170 can execute a second operating system OSh for the second display 180h, and can be configured to display an image including vehicle speed information and the like.

Meanwhile, the first operating system OSa and the second operating system OSh can be the same as illustrated in the figure, but are not limited thereto, and can be different from each other.

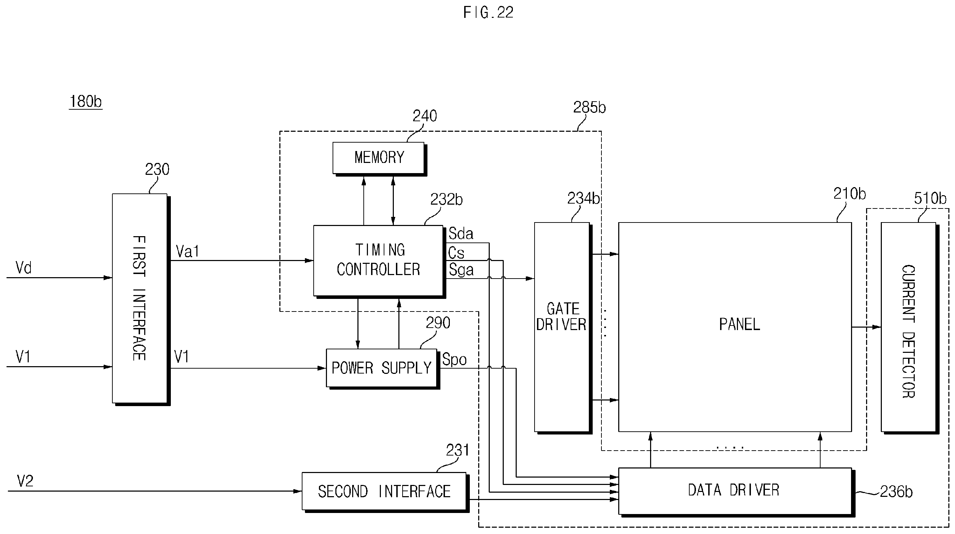

FIG. 22 illustrates another example of an internal block diagram of the first display of FIG. 3.

Hereinafter, a description will be given based on the first display 180b.

Referring to FIG. 22, the display 180b based on an organic light emitting diode panel can include an organic light emitting diode (OLED) panel 210b, a first interface 230, a second interface 231, a timing controller 232b, a gate driver 234b, a data driver 236b, a memory 240, a power supply 290, a current detector 510b, and the like.

The display 180b can receive an image signal Vd, a first DC power V1, and a second DC power V2, and can display a predetermined image based on the image signal Vd.

Meanwhile, the first interface 230 in the display 180b can receive the image signal Vd and the first DC power V1 from the signal processing device 170.

Here, the first DC power V1 can be used for the operation of the power supply 290 and the timing controller 232b in the display 180b.

The second interface 231 can receive the second DC power V2 from an external power supply 190. Meanwhile, the second DC power V2 can be input to the data driver 236b in the display 180b.

The timing controller 232b can output a data driving signal Sda and a gate driving signal Sga, based on the image signal Vd.

For example, when the first interface 230 converts the input image signal Vd and outputs a converted image signal va1, the timing controller 232b can output the data driving signal Sda and the gate driving signal Sga based on the converted image signal va1.

The timing controller 232b can further receive a control signal, a vertical synchronization signal (Vsync), and the like, in addition to the image signal Vd from the signal processing device 170.

In addition to the image signal Vd, the timing controller 232b can output a gate driving signal Sga for the operation of the gate driver 234b and a data driving signal Sda for the operation of the data driver 236b, based on the control signal, the vertical synchronization signal (Vsync), and the like.

In this case, when the panel 210 includes RGB subpixels, the data driving signal Sda can be a data driving signal for driving the RGB subpixels.

Meanwhile, when the panel 210 includes RGBW subpixels, the data driving signal Sda can be a data driving signal for driving the RGBW subpixels.

Meanwhile, the timing controller 232b can further output a control signal Cs to the gate driver 234b.

The gate driver 234b and the data driver 236b supply a scan signal and a data signal to the OLED panel 210b through a gate line GL and a data line DL, respectively, according to the gate driving signal Sga and the data driving signal Sda from the timing controller 232b. This allows the OLED panel 210b to display a predetermined image.

Meanwhile, the OLED panel 210b can include an organic light emitting layer. In order to display an image, a plurality of gate lines GL and data lines DL can be disposed in a matrix form in each pixel corresponding to the organic light emitting layer.

Meanwhile, as a scan signal is input to the gate line GL, the gate line GL can also be referred to as a scan line.

Meanwhile, the data driver 236b can output a data signal to the OLED panel 210b based on the second DC power V2 from the second interface 231.

The power supply 290 can supply various types of power to the gate driver 234b, the data driver 236b, the timing controller 232b, and the like.

The current detector 510b can detect a current flowing through subpixels of the panel 210. The detected current can be input to the processor 270 or the like, for a cumulative (or accumulated) current calculation.

Meanwhile, the timing controller 232b, the gate driver 234b, the data driver 236b, and the memory 240 in the figure can be configured as a single integrated circuit (IC).

Therefore, the timing controller 232b, the gate driver 234b, the data driver 236b, and the memory 240 can be collectively referred to as a driving controller 285b.

Meanwhile, the driving controller 285b can include a buffer (not shown) to store frame data.

In particular, the timing controller 232b in the driving controller 285b can output a gate driving signal and a data driving signal based on the frame data stored in the buffer (not shown) or the memory 240.

The timing controller 232b or the driving controller 285b can perform various types of control in the display 180b. For example, the driving controller 285b can control the gate driver 234b, the data driver 236b, the timing controller 232b, and the like.

Meanwhile, the timing controller 232b or the driving controller 285b can receive current information flowing through subpixels of the panel 210b from the current detector 510.

Then, based on the current information flowing through the subpixels of the panel 210b, the timing controller 232b or the driving controller 285b can calculate an accumulated current of each subpixel of the panel 210b. The calculated accumulated current can be stored in the memory 240.

Meanwhile, the driving controller 285b can determine burn-in when the accumulated current of each subpixel of the panel 210b is equal to or greater than an allowable value.

For example, when the accumulated current of each subpixel of the panel 210b is equal to or greater than 300000 A, the timing controller 232b or the driving controller 285b can determine that a corresponding subpixel is a burn-in subpixel.

Meanwhile, when the accumulated current of a subpixel, among the subpixels of the panel 210b, is close to an allowable value, the timing controller 232b or the driving controller 285b can determine the corresponding subpixel as a burn-in predicted subpixel.

Meanwhile, based on the current detected by the current detector 510b, the timing controller 232b or the driving controller 285b can determine a subpixel having the greatest accumulated current as a burn-in predicted subpixel.

Meanwhile, irrespective of the operation of the current detector 510b, the timing controller 232b or the driving controller 285b can predict current information to flow through the subpixels based on the image signal from the signal processing device 170, and can determine a burn-in predicted subpixel based on the predicted current information.

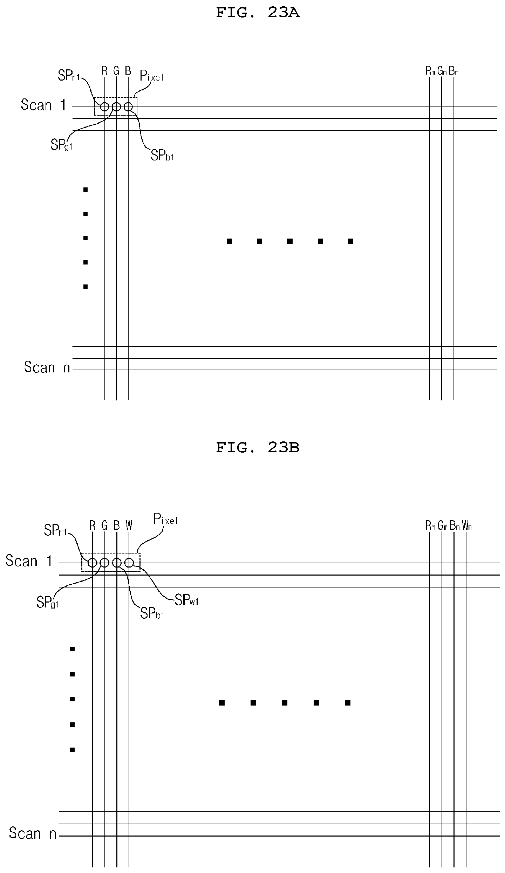

FIGS. 23A to 23D are diagrams referred to in the description of the OLED panel of FIG. 22.

First, FIG. 23A illustrates an example of a pixel in the OLED panel 210b.

Referring to FIG. 23A, the OLED panel 210b can include a plurality of scan lines Scan 1 to Scan n and a plurality of data lines R1, G1, B1 to Rm, Gm, Bm intersecting the scan lines.

Meanwhile, a pixel (subpixel) is defined in an intersection area of the scan line and the data line in the OLED panel 210b. In the figure, a pixel including RGB subpixels SR1, SG1, and SB1 is illustrated.

Meanwhile, a red organic light emitting diode, a green organic light emitting diode, and a blue organic light emitting diode are disposed in the RGB subpixels SR1, SG1, and SB1, respectively.

Next, FIG. 23B illustrates another example of a pixel in the panel 210.

Referring to FIG. 23B, the panel 210b can include a plurality of scan lines Scan 1 to Scan n and a plurality of data lines R1, G1, B1, W1 to Rm, Gm, Bm, Wm intersecting the scan lines.

Meanwhile, a pixel (subpixel) is defined in an intersecting area of the scan line and data line in the panel 210b. In the figure, a pixel including RGBW subpixels SR1, SG1, SB1, and SW1 is illustrated.

Meanwhile, a red organic light emitting diode, a green organic light emitting diode, a blue organic light emitting diode, and a white organic light emitting diode are disposed in the RGBW subpixels SR1, SG1, SB1, and SW1, respectively.

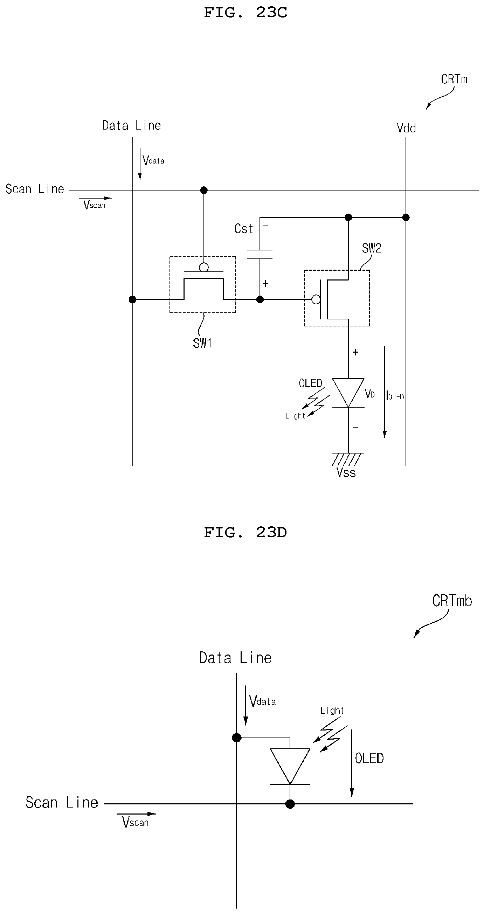

FIG. 23C illustrates an example of a circuit of a subpixel in the pixel of the panel of FIG. 23A or FIG. 23B.

Referring to FIG. 23C, a subpixel circuit CRTm, which is an active type, can include a scan switching element SW1, a storage capacitor Cst, a driving switching element SW2, and an organic light emitting layer OLED.

The scan switching element SW1 is connected at its gate terminal to a scan line and is turned on according to a scan signal Vdscan input thereto. When turned on, the scan switching element SW1 transfers the input data signal Vdata to the gate terminal of the driving switching element SW2 or one end of the storage capacitor Cst.

The storage capacitor Cst is provided between the gate terminal and the source terminal of the driving switching element SW2, and stores a predetermined difference between a data signal level transmitted to one end of the storage capacitor Cst and a DC voltage (VDD) level transmitted to the other end of the storage capacitor Cst.

For example, when the data signal has different levels according to a pulse amplitude modulation (PAM) scheme, the power level stored in the storage capacitor Cst varies according to the level difference of the data signal Vdata.

In another example, when the data signal has different pulse widths according to a pulse width modulation (PWM) scheme, the power level stored in the storage capacitor Cst varies according to the pulse width difference of the data signal Vdata.

The driving switching element SW2 is turned on according to the power level store in the storage capacitor Cst. When the driving switching element SW2 is turned on, a driving current IOLED proportional to the stored power level flows to the organic light emitting layer OLED. Accordingly, the organic light emitting layer OLED performs a light emitting operation.

The organic light emitting layer OLED includes a light emitting layer (EML) corresponding to a subpixel, and can include at least one of a hole injection layer (HIL), a hole transport layer (HTL), an electron transport layer (ETL), and an electron injection layer (EIL). In addition, the organic light emitting layer OLED can include a hole blocking layer and the like.

In the figure, although p-type MOSFETs are illustrated as the scan switching element SW1 and the driving switching element SW2, n-type MOSFETs or other switching elements such as JFET, IGBT, or SIC can also be used.

Meanwhile, the pixel is a hold-type element that continuously emits light in the organic light emitting layer OLED during a unit display period, specifically during a unit frame, after a scan signal is applied.

Meanwhile, the subpixel circuit CRTm in the figure is driven by an active-matrix scheme.

FIG. 23D illustrates another example of a circuit of a subpixel in the pixel of the panel of FIG. 23A or FIG. 23B.

Referring to FIG. 23D, an organic light emitting subpixel circuit CRTm, which is a passive type, can include only an organic light emitting diode LED without any separate switching element.

As illustrated in FIG. 23D, the anode of the organic light emitting diode LED is connected to a data line to receive a data signal Vdata, and the cathode of the organic light emitting diode LED is connected to a scan line to receive a scan signal Vscan.

The organic light emitting diode can emit light or remain non-emissive based on a plurality of subframes according to a passive-matrix scheme.

Meanwhile, unlike FIG. 23D, the anode of the organic light emitting diode LED can be connected to a scan line to receive a scan signal Vscan, and the cathode of the organic light emitting diode LED can be connected to a data line to receive a data signal Vdata.

Meanwhile, the subpixel circuit CRTm in the figure is driven by a passive-matrix scheme.

Meanwhile, the method of operating the signal processing device 170 described with reference to FIGS. 10 to 21C can be applied to the first display 180b based on the OLED panel 180b.

Meanwhile, when various tell-tale images, such as those illustrated in FIGS. 10 to 21C, are displayed on the OLED panel 210b, the signal processing device 170 or the driving controller 285b can perform degradation compensation for pixels of the tell-tale images to reduce degradation caused by burn-in.

Therefore, the present disclosure also describes degradation determination, degradation compensation, or the like of various tell-tale images.

For example, when an alpha blending area is included in a first tell-tale image among at least one tell-tale image, the signal processing device 170 or the driving controller 285b can perform luminance compensation of respective colors of the alpha blending area upon degradation compensation of the alpha blending area.

In another example, when alpha blending values for respective colors of the alpha blending area are different, the signal processing device 170 or the driving controller 285b can cause luminance compensation values for the respective colors of the alpha blending area to differ from one another upon degradation compensation of the alpha blending area.

Specifically, upon degradation compensation, the signal processing device 170 or the driving controller 285b can cause luminance compensation values for red, orange, and green to differ from one another.

Meanwhile, when alpha blending values for respective colors of the alpha blending area are different, the signal processing device 170 or the driving controller 285b can cause luminance compensation values for red, orange, and green of the alpha blending area to differ from one another. Accordingly, degradation of the tell-tale image can be prevented.

The signal processing device 170 or the driving controller 285b can perform degradation compensation by shifting only a plurality of tell-tale images within a vehicle information image.

For example, the signal processing device 170 or the driving controller 285b can perform pixel shifting, first axis line shifting, or second axis line shifting only on the plurality of tell-tale images within the vehicle information image.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical idea or prospect of the present disclosure.

## Claims

1. A display apparatus for a vehicle, the display apparatus comprising:
a display; and
a signal processing device configured to output an image signal to the display,
wherein, while displaying a vehicle information image in a first area of the display, the signal processing device is configured to change the luminance of the vehicle information image or an image based on a camera to be displayed in a second area of the display, in response to a difference in luminance between the vehicle information image and the image based on the camera being greater than or equal to a predetermined value.

2. The display apparatus of claim 1, wherein, during nighttime driving, the signal processing device is configured to increase the luminance of the image based on the camera in a stepwise manner, in response to the difference in luminance between the vehicle information image and the image based on the camera being greater than or equal to the predetermined value.

3. The display apparatus of claim 1, wherein the signal processing device is configured to increase the luminance of the image based on the camera in a stepwise manner, in response to the difference in luminance between the vehicle information image and the image based on the camera being greater than or equal to the predetermined value and the luminance of the image based on the camera being greater than the luminance of the vehicle information image.

4. The display apparatus of claim 1, wherein, while displaying the vehicle information image in the first area of the display and displaying a map image in the second area of the display, when the camera is activated and the image displayed in the second area is switched to the image based on the camera, the signal processing device is configured to change the luminance of the vehicle information image or the image based on the camera, in response to a difference in luminance between the vehicle information image and the image based on the camera being greater than or equal to the predetermined value.

5. The display apparatus of claim 1, wherein the signal processing device is configured to change the luminance of the vehicle information image or the image based on the camera based on ambient illuminance around the vehicle.

6. The display apparatus of claim 1, wherein the signal processing device is configured to change the luminance of the vehicle information image or the image based on the camera based on a setting input.

7. The display apparatus of claim 1, wherein, while displaying the vehicle information image in the first area of the display, the signal processing device is configured to overlay a second layer including a tell-tale image on a first layer including surrounding vehicle information.

8. The display apparatus of claim 7, wherein the signal processing device is configured to differentiate a safety level of the first layer including the surrounding vehicle information from a safety level of the second layer including the tell-tale image.

9. The display apparatus of claim 7, wherein the signal processing device is configured to overlay the second layer and the first layer on a third layer including the image based on the camera.

10. The display apparatus of claim 1, wherein the display comprises:
a liquid crystal panel; and
a backlight configured to output light to the liquid crystal panel, and
wherein, in response to a difference in luminance between the vehicle information image in a first area of the display and an image based on a camera to be displayed in a second area of the display being greater than or equal to a predetermined value, the signal processing device is configured to change light emitted from the backlight disposed in the first area or the second area.

11. The display apparatus of claim 10, wherein, during nighttime driving, the signal processing device is configured to increase, in a stepwise manner, light emitted from the backlight disposed in the second area, in response to the difference in luminance between the vehicle information image and the image based on the camera being greater than or equal to the predetermined value.

12. The display apparatus of claim 10, wherein the signal processing device is configured to increase, in a stepwise manner, light emitted from the backlight disposed in the second area, in response to the difference in luminance between the vehicle information image and the image based on the camera being greater than or equal to the predetermined value and the luminance of the image based on the camera being greater than the luminance of the vehicle information image.

13. The display apparatus of claim 1, wherein the display comprises an organic light emitting diode (OLED) panel, and
wherein, in response to a difference in luminance between the vehicle information image in a first area of the display and an image based on a camera to be displayed in a second area of the display being greater than or equal to a predetermined value, the signal processing device is configured to change the luminance of the vehicle information image or the image based on the camera.

14. The display apparatus of claim 13, wherein, during nighttime driving, the signal processing device is configured to increase the luminance of the image based on the camera in a stepwise manner, in response to the difference in luminance between the vehicle information image and the image based on the camera being greater than or equal to the predetermined value.

15. The display apparatus of claim 13, wherein the signal processing device is configured to increase, in a stepwise manner, the luminance of the image based on the camera displayed on the OLED panel, in response to the difference in luminance between the vehicle information image and the image based on the camera being greater than or equal to the predetermined value and the luminance of the image based on the camera being greater than the luminance of the vehicle information image.

16. The display apparatus of claim 13, wherein the display further comprises a driving controller configured to output a driving signal to the OLED panel, and
wherein, based on at least one tell-tale image stored in a memory, the driving controller is configured to output the at least one tell-tale image in a partial area of the OLED panel.

17. A display apparatus for a vehicle, the display apparatus comprising:
a display; and
a signal processing device configured to output an image signal to the display,
wherein, while displaying a vehicle information image in a first area of the display and a map image is displayed in a second area of the display, the signal processing device is configured to change, in response to a difference in luminance between an image based on a camera to be displayed in the first area in place of the vehicle information image and the map image or the vehicle information image being greater than or equal to a predetermined value, the luminance of the image based on the camera, the map image, or the vehicle information image.

18. The display apparatus of claim 17, wherein, during nighttime driving, the signal processing device is configured to increase the luminance of the image based on the camera in a stepwise manner, in response to the difference in luminance between the map image and the image based on the camera being greater than or equal to the predetermined value.

19. The display apparatus of claim 17, wherein the signal processing device is configured to increase the luminance of the image based on the camera in a stepwise manner, in response to the difference in luminance between the map image and the image based on the camera being greater than or equal to the predetermined value and the luminance of the image based on the camera being greater than the map image or the vehicle information image.
